# EUROPÄISCHE PATENTSCHRIFT

(11) **EP 3 833 225 B1**
(45) Veröffentlichungstag und Bekanntmachung des Hinweises auf die Patenterteilung: **02.08.2023**
(21) Anmeldenummer: 19772989.0
(22) Anmeldetag: 29.08.2019
(51) Int. Cl.: A47J 27/21

(54) **KOCHGESCHIRR FÜR EIN INDUKTIONSKOCHFELD SOWIE KOCHSYSTEM**
COOKING UTENSIL FOR AN INDUCTION COOKTOP AND COOKING SYSTEM
USTENSILE DE CUISSON POUR UNE PLAQUE DE CUISSON À INDUCTION ET SYSTÈME DE CUISSON

(30) Priorität: 28.09.2018 DE 102018008050; 04.06.2019 DE 202019103136 U
(43) Veröffentlichungstag der Anmeldung: 16.06.2021
(73) Patentinhaber: Xinco GmbH, 44801 Bochum (DE)
(72) Erfinder: IFLAND, Thomas, 45529 Hattingen (DE); ZACHOS, Alexandros, 45131 Essen (DE)
(74) Vertreter: Pfeffer, Michael
(86) Internationale Anmeldenummer: PCT/EP2019/073105
(87) Internationale Veröffentlichungsnummer: WO 2020/064262

(56) Entgegenhaltungen:
- WO-A1-2016/074743
- CN-B- 102 072 506
- CN-B- 102 100 484
- CN-Y- 200 945 093
- DE-A1- 19 729 661
- DE-A1-102014 111 817

## Beschreibung

Die Erfindung betrifft ein Kochgeschirr für ein Induktionskochfeld mit mindestens einer Kochstelle, wobei das Kochgeschirr einen zur Aufnahme von Kochgut und/oder Gargut ausgebildeten Behälter aufweist.

Aus dem Stand der Technik ist ein Kochgeschirr mit einem Kontaktabschnitt zur Kontaktierung mit einem Induktionskochfeld bekannt. Das Kochgeschirr ist dabei als Wasserkocher mit einem Behälter ausgebildet und dient zum Erhitzen von Wasser. Um das Wasser in dem Behälter zu erhitzen, wird der Kontaktabschnitt des Kochgeschirrs auf eine der Kochstellen gestellt. Danach wird die entsprechende Kochstelle des Induktionskochfelds durch einen Benutzer eingeschaltet und der Wasserkocher erwärmt sich. Dabei wird das Wasser erwärmt bzw. erhitzt bis das Wasser kocht. Des Weiteren weist der Wasserkocher einen Temperatursensor, eine Steuereinheit und eine Sendeeinrichtung auf. Wenn das im Behälter angeordnete Wasser eine Temperatur von etwa 100 Grad Celsius erreicht, erfasst der Temperatursensor diese und über die Steuereinheit wird die Sendeeinrichtung aktiviert, welche ein Abschaltsignal für die entsprechende Kochstelle des Induktionskochfelds an eine Empfangseinrichtung des Induktionsfelds sendet. Eine Induktionskochfeldsteuereinheit sorgt danach für die Abschaltung der Kochstelle, auf welcher der Wasserkocher angeordnet ist. Nachteilig an dieser Lösung ist, dass der Wasserkocher, als auch das Induktionskochfeld Sende- bzw. Empfangseinrichtungen aufweisen müssen und somit einen komplizierten und kostenintensiven konstruktiven Aufbau aufweisen. Der Wasserkocher kann zwar auch mit einem Induktionskochfeld betrieben werden, welches keine Empfangseinrichtung aufweist, aber in diesem Fall würde sich der Wasserkocher nicht automatisch abschalten, und es besteht die Gefahr, dass der Wasserkocher überhitzt, wenn das Wasser vollständig in dem Wasserkocher verdampft ist.

Aus der CN 200 945 093 Y ist ein Kochgeschirr bekannt, welches eine Kochplatte aufweist, die unmittelbar mit einem Hebeelement verbunden ist.

In der CN 102 100 484 B ist ein Kochgeschirr offenbart, bei welchem eine Kochplatte verschwenkbar an einer Achse angelenkt ist, wobei die Achse an einer inneren Bodenwandung des Kochgeschirrs angeordnet ist. Ein Hebeelement des Kochgeschirrs ist unmittelbar mit der Kochplatte verbunden. In der WO 2016074743 A1 ist ein Kochgeschirr offenbart, welches eine Kochplatte aufweist, die mit einem Hebeelement verbunden ist.

Es ist daher die Aufgabe der Erfindung, ein Kochgeschirr für ein Induktionskochfeld bereitzustellen, welches einen einfachen und kostengünstigen konstruktiven Aufbau aufweist und zusätzlich sicher zur Aufbereitung des Kochguts und/oder Garguts betreibbar ist..

Gelöst wird diese Aufgabe durch ein Kochgeschirr mit den Merkmalen des Anspruchs 1, insbesondere durch den kennzeichnenden Teil des Anspruchs 1.

Dadurch, dass das Kochgeschirr mindestens eine Kochplatte aufweist, welche relativ bewegbar zu dem Kontaktabschnitt in dem Behälter angeordnet ist, und das Kochgeschirr mindestens ein Stellglied zur Erzeugung einer Relativbewegung zwischen der Kochplatte und dem Kontaktabschnitt aufweist, wobei das Stellglied die Kochplatte und den Kontaktabschnitt in einer Betriebsposition und in einer Ruheposition relativ zueinander positioniert, wobei in der Betriebsposition die Kochplatte durch den Kontaktabschnitt von dem Induktionskochfeld induktiv erwärmt wird, und in der Ruheposition die Kochplatte so weit von dem Kontaktabschnitt beabstandet ist, dass keine Induktion der Kochplatte durch das den Kontaktabschnitt kontaktierende Induktionskochfeld erfolgt, kann der konstruktive Aufbau des Kochgeschirrs im Vergleich zum Stand der Technik deutlich vereinfacht werden, weil auf zusätzliche elektrische Komponenten, wie beispielsweise eine Steuereinheit und eine Sendeeinheit für das Kochgeschirr verzichtet werden kann. Außerdem kann das Kochgeschirr auf handelsüblichen Induktionskochfeldern verwendet werden, insbesondere unabhängig davon, ob das verwendete Induktionskochfeld eine Empfangseinheit zum Empfangen von Abschaltsignalen zum Abschalten der Kochstellen aufweist. Mit dem erfindungsgemäßen Kochgeschirr wird in vorteilhafter Weise ausgeschlossen, dass das Kochgeschirr überhitzt, denn sobald eine vorbestimmte kritische Temperatur erreicht wird, bewegt das Stellglied die Kochplatte von der Kochstelle weg. Folglich ist dann die Kochplatte so zu der Kochstelle des Induktionskochfelds beabstandet angeordnet, dass eine Überhitzung der Kochplatte ausgeschlossen ist. Mit der relativen Bewegung der Kochplatte zu dem Kontaktabschnitt kann die Kochplatte einfach in Betriebsposition gebracht werden und über das Induktionskochfeld induktiv erwärmt werden. Mit der Positionierung in der Ruheposition ist die Kochplatte hingegen so weit von dem Kontaktabschnitt des Behälters beabstandet, dass durch das den Kontaktabschnitt kontaktierende Induktionsfeld keine relevanten Wirbelströme in der Kochplatte erzeugt werden. Hierdurch erfolgt keine weitere Erhitzung des Koch- oder Garguts, wenn sich die Kochplatte in der Ruheposition befindet. In der Betriebsposition erzeugt das Induktionskochfeld hingegen Wirbelströme in der Kochplatte und erhitzt diese, sodass das Koch- und /oder Gargut im Behälter einfach erwärmt werden kann.

Vorzugsweise ist die Kochplatte in der Ruheposition so weit von dem Kontaktabschnitt beabstandet, dass das den Kontaktabschnitt kontaktierende Induktionskochfeld automatisch abschaltet. Hierdurch kann bei Erreichen der vorbestimmten kritischen Temperatur eine automatische Beendigung des Kochvorganges im Kochgeschirr erfolgen. Dadurch wird nach Erreichen der vorbestimmten kritischen Temperatur keine zusätzliche Energie mehr verbraucht.

Mit der Positionierung der Kochplatte durch das Stellglied erfolgt so eine indirekte Kopplung des Kochgeschirrs an die Elektronik des Induktionskochfelds, die in der Regel eine Abschaltung der Kochstelle vorsieht, wenn keine Induktion mehr erfolgt, da der Abstand zum induktiv erwärmten Element zu groß wird. Für diese Kopplung wird die Kochplatte erfindungsgemäß soweit aus dem Induktionsbereich heraus bewegt, dass dies von dem Induktionskochfeld detektiert wird, das daraufhin die Kochstelle automatisch deaktiviert.

Das erfindungsgemäße Kochgeschirr kann ausschließlich mit mechanischen Komponenten realisiert werden. Im Rahmen der Erfindung kann das Kochgeschirr als Wasserkocher, als Pfanne, als Topf, als Teekocher, als Wok, als Eierkocher und dergleichen ausgebildet sein.

Das Gargut kann eine breiförmige Speise oder eine feste Speise sein. Das Kochgut kann Fluid, insbesondere Wasser, Suppe, Tee oder dergleichen sein.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass zumindest der Kontaktabschnitt des Behälters ein nichtferromagnetisches Material umfasst, vorzugsweise der Behälter vollständig aus einem nichtferromagnetischen Material ausgebildet ist und zumindest die Kochplatte ein ferromagnetisches Material umfasst, vorzugsweise die Kochplatte vollständig aus einem ferromagnetischen Material ausgebildet ist. Mit dem nicht ferromagnetischen Material am Kontaktabschnitt des Behälters erhitzt sich dieser nicht durch die Induktion. Hierdurch erhitzt sich der Kontaktabschnitt bzw. der Behälter selbst lediglich durch den Kontakt zu dem Gar- und / oder Kochgut.

Besonders bevorzugt ist eine Ausführungsform, die vorsieht, dass das Stellglied ein Federelement umfasst, insbesondere eine Blattfeder oder Spiralfeder oder Tellerfeder oder Schenkelfeder oder Drehfeder, und/oder als ein Formgedächtniselement ausgebildet ist. Mit einem als Federelement ausgebildeten Stellglied ist eine einfache Positionierung der Kochplatte möglich. Die Spiralfedern können bevorzugt als Schraubenfedern ausgestaltet sein, welche sich elastisch verformen lassen. Die Spiralfedern lassen sich einfach und kostengünstig in dem Kochgeschirr verbauen. Blattfedern und Tellerfedern können vorteilhafterweise zu einem kompakten und konstruktiven Aufbau des Kochgeschirrs beitragen.

Eine besonders vorteilhafte Ausführung der Erfindung bezieht sich darauf, dass das Stellglied als thermischer Aktuator ausgestaltet ist, der vorzugsweise aus einem Bimetall oder Formgedächtniselement gebildet ist. Ein thermischer Aktuator aus Bimetall ist vorzugsweise als thermisch aktives Bauteil ausgebildet, welches bei einer Temperaturveränderung eine vorzugsweise kontinuierliche Bewegung ausführt. Es können außerdem thermische Schnappscheiben und Schnappelemente für das Kochgeschirr verwendet werden, die wegen ihrer Geometrie eine diskontinuierliche Bewegung bei Temperaturänderungen durchführen. Mit einer galvanischen oder chemischen Beschichtung lässt sich der thermische Aktuator vorteilhafterweise gegen Korrosion schützen.

Besonders bevorzugt ist das Stellglied als ein thermischer Aktuator in Form eines Federelements ausgestaltet, das aus einem Bimetall oder einer Formgedächtnislegierung gebildet ist und den gesamten Kochplattenkörper relativ zum Kontaktabschnitt positioniert. Alternativ kann das Stellglied auch als ein thermischer Aktuator in Form eines Drahtelements ausgestaltet sein, das aus einem Bimetall oder einer Formgedächtnislegierung gebildet ist und den gesamten Kochplattenkörper relativ zum Kontaktabschnitt positioniert.

Eine besonders vorteilhafte Ausführung der Erfindung sieht vor, dass das Stellglied als Hebevorrichtung für die Kochplatte ausgebildet ist, wobei die Relativbewegung zwischen der Kochplatte und dem Kontaktabschnitt beim Übergang von der Betriebsposition in die Ruheposition translatorisch und/oder rotatorisch erfolgt. Die Hebevorrichtung sorgt vorteilhafterweise dafür, dass die Kochplatte beim Erreichen einer am Stellglied festgelegten Grenzwerttemperatur zuverlässig von dem das Induktionskochfeld kontaktierenden Kontaktabschnitt entfernt wird, sodass keine weitere Erhitzung der Kochplatte erfolgt.

Eine vorteilhafte Ausführung der Erfindung sieht vor, dass das Stellglied ein Hebeelement umfasst, welches mit der Kochplatte verbunden ist und eine von dem Stellglied erzeugte Stellkraft zur Erzeugung der Relativbewegung zwischen der Kochplatte und dem Kontaktabschnitt auf die Kochplatte überträgt. Mit der Übertragung der Stellkraft kann die Relativbewegung der Kochplatte einfach von dem Stellglied eingeleitet werden.

Besonders vorteilhaft ist eine Ausführungsform, die vorsieht, dass das Hebeelement mit der Kochplatte über ein Gelenk verbunden ist, wobei die erzeugte Stellkraft eine Schwenkbewegung der Kochplatte relativ zum Hebeelement in dem Gelenk erzeugt. Mit der über das Gelenk in die Kochplatte eingeleiteten Stellkraft lässt sich die Kochplatte in einer platzsparenden Bewegung von der Betriebsposition in die Ruheposition bringen. Außerdem lässt sich über das Gelenk eine relativ kurze Stellbewegung des Hebeelements durch das Stellglied in eine relativ große Schwenkbewegung der Kochplatte verstärken, sodass mit einem relativ kleinen Stellglied große Schwenkbewegungen der Kochplatte zwischen Betriebs- und Ruheposition möglich sind.

Eine vorteilhafte Ausgestaltung sieht vor, dass die Kochplatte schwenkbeweglich an dem Behälter angelenkt ist, wobei die Relativbewegung zwischen der Kochplatte und dem Kontaktabschnitt eine Schwenkbewegung um die Anlenkung ist, wobei die Kochplatte in Ruheposition so gegenüber dem Kontaktabschnitt verschwenkt ist, dass keine Induktion der Kochplatte durch das den Kontaktabschnitt kontaktierende Induktionskochfeld erfolgt. Mit der Anlenkung ist die Kochplatte in dem Behälter schwenkbeweglich festgelegt, sodass die Relativbewegung von der Betriebsposition in die Ruhepostition durch eine Verschwenkung der Kochplatte vorbestimmt ist.

Gemäß einer bevorzugten Ausgestaltung der Erfindung ist vorgesehen, dass die Kochplatte mehrteilig aufgebaut ist, wobei die Kochplattenteile schwenkbeweglich zueinander angeordnet sind, wobei die Relativbewegung zwischen der Kochplatte und dem Kontaktabschnitt eine Schwenkbewegung der Kochplattenteile vorzugsweise zueinander und zum Kontaktabschnitt ist, wobei die Kochplattenteile in Ruheposition so gegenüber dem Kontaktabschnitt verschwenkt sind, dass keine Induktion der Kochplatte durch das den Kontaktabschnitt kontaktierende Induktionskochfeld erfolgt. Mit einer Verschwenkung der Kochplattenteile kann eine platzsparende Relativbewegung zwischen Kochplatte und Kontaktabschnitt realisiert werden, um die Kochplattenteile in Betriebsposition und Ruheposition zu bewegen.

Besonders vorteilhaft ist eine Ausführungsform, die vorsieht, dass die Kochplatte zumindest in der Betriebsposition in dem im Behälter aufgenommenen Kochgut und / oder Gargut kontaktierend angeordnet ist. Mit dem Kontakt zwischen Kochgut und / oder Gargut lässt sich dieses einfach von der mittels Induktion erhitzten Kochplatte in Betriebsposition erwärmen.

Ferner kann das Kochgeschirr mindestens ein Lagerelement mit mindestens einem Auflageabschnitt zur Kontaktierung mit dem Induktionskochfeld aufweisen, welche bewegbar an dem Behälter angeordnet ist, und das Kochgeschirr mindestens ein Stellglied zur Erzeugung einer Relativbewegung zwischen dem Lagerelement und dem Behälter aufweist, wobei das Stellglied das Lagerelement und den Behälter in einer Betriebsposition und in einer Ruheposition relativ zueinander positioniert, wobei in der Betriebsposition zumindest der Kontaktabschnitt des Behälters kontaktierend auf der Kochstelle, und in der Ruheposition der Kontaktabschnitt des Behälters beabstandet zu der Kochstelle und der Auflageabschnitt des Lagerelements kontaktierend auf dem Induktionskochfeld angeordnet sind. Durch diese vorteilhafte Ausgestaltung des Kochgeschirrs wird der konstruktive Aufbau des Kochgeschirrs im Vergleich zum Stand der Technik deutlich vereinfacht, weil auf zusätzliche elektrische Komponenten, wie beispielsweise eine Steuereinheit und eine Sendeeinheit für das Kochgeschirr verzichtet werden kann. Des Weiteren kann das Kochgeschirr für jedes Induktionskochfeld verwendet, und zwar unabhängig davon, ob es eine Empfangseinheit zum Empfangen von Abschaltsignalen zum Abschalten der Kochstellen aufweist. Daher kann das Kochgeschirr auch im Rahmen einer Nachrüstlösung für das Induktionskochfeld verwendet werden. Durch das Kochgeschirr wird ferner in vorteilhafter Weise ausgeschlossen, dass sich das Kochgeschirr überhitzt. Sobald eine vorbestimmte kritische Temperatur erreicht wird, wird diese von einem vorzugsweise mechanischen Sensorelement und/oder vorzugsweise mechanischen Schaltelement erfasst, und der Kontaktabschnitt des Kochgeschirrs bewegt sich durch das Stellglied von der Kochstelle weg. Folglich ist dann der Kontaktabschnitt des Behälters beabstandet zur der Kochstelle des Induktionskochfelds angeordnet, so dass eine Überhitzung des Kochgeschirrs auch dann ausgeschlossen ist, wenn beispielsweise ein Fluid, insbesondere Wasser in dem Kochgeschirr vollständig verdampft ist.

Vorzugsweise ist der Kontaktabschnitt hier in der Ruheposition so weit von dem Induktionskochfeld beabstandet, dass das den Kontaktabschnitt kontaktierende Induktionskochfeld automatisch die Kochstelle abschaltet. Dadurch kann bei Erreichen der vorbestimmten kritischen Temperatur eine automatische Beendigung des Kochvorganges im Kochgeschirr erfolgen. Hierdurch wird nach Erreichen der vorbestimmten kritischen Temperatur keine zusätzliche Energie mehr verbraucht.

Im Ergebnis kann das Kochgeschirr ausschließlich mit mechanischen Komponenten ausgebildet werden.

Gemäß einer vorteilhaften Ausgestaltung ist vorgesehen, dass das Stellglied ein Schaltelement und/oder ein Sensorelement umfasst, wobei das Schaltelement und/oder das Sensorelement zum Aktivieren des Stellglieds ausgebildet ist. Das Schaltelement kann derart ausgebildet sein, dass es bei einer vorbestimmten, beispielsweise durch das Sensorelement erfassten Grenzwerttemperatur auslösbar ist. So kann beispielsweise bei Wasser, insbesondere bei einer Grenzwerttemperatur von etwa 100 Grad Celsius das Schaltelement vorzugsweise selbstständig auslösen, um das Stellglied zu aktivieren, welches dann eine Relativbewegung zwischen dem Behälter und dem Lagerelement bewirkt. Auch das Stellglied und/oder das Schaltelement kann mit einer geeigneten Materialauswahl und/oder Materialdicke auf eine vorbestimmte Temperatur, insbesondere Grenzwerttemperatur ausgelegt werden, um sich zu verformen.

Der Kontaktabschnitt des Behälters kann als eine Kontaktfläche des Behälters ausgestaltet sein. Der Auflageabschnitt des Lagerelements kann als Auflagefläche ausgebildet sein.

Ferner kann das Lagerelement als zumindest teilweise geschlossener Hohlzylinder, vorzugsweise als Ring ausgebildet sein.

Das Stellglied kann vorzugsweise als Lagerelement ausgebildet sein. Mehrere Stellglieder können auch ein oder mehrere Lagerelemente bilden, die mit dem Behälter verbunden sind.

Der Behälter kann beispielsweise Stahl und/oder Edelstahl und/oder Gusseisen und/oder Aluminiumguss und/oder Stahlemail und/oder Glas und/oder Keramik umfassen. Des Weiteren sollte der Behälter mindestens einen ferromagnetischen Werkstoff umfassen, wie beispielsweise Kupfer und/oder Aluminium und/oder Stahl.

Das Lagerelement kann beispielsweise zumindest teilweise aus Kunststoff ausgebildet sein, vorzugsweise aus Polyamid, Polyester, Polyacetol und kann daher die Werkstoffe PA6, PA66, PA612, TPC-ET, POM, PPA, insbesondere Zytel HTN umfassen. Der Behälter und/oder das Lagerelement sollten für das Garen, Kochen und Erhitzen temperaturgeeignete und für Lebensmittel zugelassene Werkstoffe umfassen.

Nach einer bevorzugten Ausführung des Kochgeschirrs kann vorgesehen sein, dass in der Betriebsposition der Auflageabschnitt des Lagerelements beabstandet zu dem Induktionskochfeld angeordnet ist oder der Auflageabschnitt des Lagerelements kontaktierend auf dem Induktionskochfeld angeordnet ist. Wenn in der Betriebsposition der Auflageabschnitt des Lagerelements beabstandet zu dem Induktionskochfeld angeordnet ist, wird in vorteilhafterweise verhindert, dass das Lagerelement beim Aufwärmen des Kochgeschirrs direkt durch das Induktionskochfeld, insbesondere durch die Kochstelle erhitzt. Dazu sollte ein Mindestabstand von dem Auflageabschnitt zum Induktionskochfeld, insbesondere zur Kochstelle von vorzugsweise mindestens 2cm vorgesehen sein. Wenn das Lagerelement beispielsweise zumindest teilweise aus Kunststoff ausgebildet ist, insbesondere der Auflageabschnitt des Lagerelements aus Kunststoff ausgebildet ist, kann der Kunststoff vor zu hohen Temperaturen geschützt werden. Des Weiteren kann während des Betriebs durch eine beabstandete Anordnung des Lagerelements von dem Induktionskochfeld verhindert werden, dass sich das Lagerelement durch das Induktionskochfeld, insbesondere durch die Kochstelle direkt erhitzt. Wenn das Lagerelement beispielsweise aus einem Werkstoff wie Aluminium ausgebildet ist, kann somit der Benutzer beim Berühren des Lagerelements vor zu hohen und unangenehmen Temperaturen, insbesondere Verbrennungen geschützt werden. Dies kann weiter sichergestellt werden, wenn der radiale Abstand zwischen dem Behälter und dem Lagerelement ausreichend groß ist, und vorzugsweise mindestens 2cm, besonders bevorzugt mindestens 3cm beträgt. Wenn das Kochgeschirr nach Beendigung des Koch- bzw. Garvorgangs in seiner Ruheposition auf einen Tisch zum Servieren gestellt wird, kann dies sehr sicher durchgeführt werden, weil das Lagerelement eine für den Benutzer angenehme und ungefährliche Temperatur aufweist und gleichzeitig das im Behälter angeordnete Kochgut bzw. Gargut die für den Benutzer gewünschte Temperatur aufweist. Der Behälter kann dabei derart an dem Lagerelement angeordnet sein, dass ein Benutzer vor Verletzungen durch eine erhöhte Temperatur des Behälters geschützt wird.

Wenn in der Betriebsposition der Auflageabschnitt des Lagerelements kontaktierend auf dem Induktionskochfeld angeordnet ist, kann das Kochgeschirr noch sicherer und stabiler auf dem Induktionskochfeld gelagert werden. Denkbar ist es auch, die Auflageabschnitte des Lagerelements mit einer reibungserhöhenden Schicht zu versehen, wie beispielsweise einem Elastomer, insbesondere einem Gummiwerkstoff, um ein Verrutschen des Kochgeschirrs und/oder des Lagerelements auf dem Induktionskochfeld, insbesondere in der Betriebsposition und/oder Ruheposition zu verhindern. Somit wird sichergestellt, dass das Kochgeschirr auf der Kochstelle verbleibt, auch wenn Stöße mit einer geringfügigen Kraft auf das Kochgeschirr wirken.

Der konstruktive Aufbau des Kochgeschirrs kann weiter vereinfacht werden, wenn das Stellglied das Lagerelement mit dem Behälter kraftschlüssig und/oder formschlüssig verbindet. Mit dieser Maßnahme gelingt es, eine sichere Relativbewegung zwischen dem Behälter und dem Lagerelement zu erzielen.

Um den Behälter in der Betriebsposition zuverlässig zu erwärmen bzw. zu erhitzen und gleichzeitig eine Erwärmung des Lagerelements durch das Induktionskochfeld zu verhindern, kann vorgesehen sein, dass zumindest der Auflageabschnitt des Lagerelements ein nichtferromagnetisches Material umfasst, vorzugsweise das Lagerelement vollständig aus einem nichtferromagnetischen Material ausgebildet ist und zumindest der Kontaktabschnitt des Behälters ein ferromagnetisches Material umfasst, vorzugsweise der Behälter vollständig aus einem ferromagnetischen Material ausgebildet ist.

Der Kontaktabschnitt, insbesondere eine Bodenwandung des Behälters, welche in Kontakt mit dem Induktionskochfeld, insbesondere mit der Kochstelle ist, kann dabei beispielsweise einen sandwichförmigen Aufbau aufweisen. So kann beispielsweise der Kontaktabschnitt eine erste Schicht aufweisen, welche in der Betriebsposition im direkten Kontakt mit dem Induktionskochfeld, insbesondere mit der Kochstelle ist. Weiter kann der Kontaktabschnitt eine zweite Schicht aufweisen, welche über der ersten Schicht angeordnet ist und eine dritte Schicht aufweisen, welche über der zweiten Schicht angeordnet ist. Je nach Ausführung des Kochgeschirrs kann die zweite Schicht ein nichtferromagnetisches Material umfassen und die erste Schicht und vorzugsweise die dritte Schicht ein ferromagnetisches Material umfassen, so dass die zweite Schicht zwischen der ersten Schicht und der dritten Schicht eingebettet ist. Dabei kann die zweite Schicht vollständig und von außen unsichtbar eingebettet sein. Alternativ ist es möglich, dass die zweite Schicht vorzugsweise als, insbesondere umlaufender Streifen außen am Behälter sichtbar ist.

Ebenfalls ist es möglich, dass die Bodenwandung des Behälters eine sandwichförmige Anordnung mit zwei Schichten aufweist, wobei die erste Schicht, welche in der Betriebsposition im direkten Kontakt mit dem Induktionskochfeld, insbesondere mit der Kochstelle ist, ein nichtferromagnetisches Material umfasst und die zweite Schicht ein ferromagnetisches Material umfasst. In der einfachsten Form kann der Kontaktabschnitt eine einzige Schicht aufweisen, welche ein ferromagnetisches Material umfasst. Es sollte jedoch immer sichergestellt werden, dass die ferromagnetische Schicht des Kontaktabschnitts derart angeordnet ist, dass in der Betriebsposition der Behälter durch das Induktionskochfeld zuverlässig auf die gewünschte Temperatur erhitzt bzw. erwärmt werden kann.

Das Kochgeschirr kann sehr einfach und kostengünstig hergestellt werden, wenn das Stellglied als Federelement, insbesondere als Blattfeder oder Spiralfeder oder Tellerfeder oder Schenkelfeder oder Drehfeder ausgebildet ist und/oder als Formgedächtniselement ausgebildet ist.

Das Formgedächtniselement umfasst beispielsweise eine Formgedächtnislegierung, welche sehr große Kräfte ohne Ermüdung übertragen können. Das Formgedächtniselement kann so stabil und elastisch ausgebildet sein, dass es für die gesamte Lebensdauer des Kochgeschirrs verwendet werden kann.

Die Spiralfedern können als Schraubenfedern ausgestaltet sein, welche sich elastisch verformen lassen. Die Spiralfedern lassen sich einfach und kostengünstig in dem Kochgeschirr verbauen. Blattfedern und Tellerfedern können zu einem kompakten und konstruktiven Aufbau des Kochgeschirrs in vorteilhafterweise beitragen.

Nach einer weiteren bevorzugten Ausführung des Kochgeschirrs kann vorgesehen sein, dass das Stellglied und/oder das Schaltelement und/oder das Sensorelement als thermischer Aktuator ausgestaltet ist, der vorzugsweise aus einem Bimetall oder Formgedächtniselement ausgebildet ist. Thermische Aktoren aus Bimetall können als thermisch aktive Bauteile ausgebildet sein, welche bei einer Temperaturveränderung eine vorzugsweise kontinuierliche Bewegung ausführen. Denkbar ist es auch, thermische Schnappscheiben und Schnappelemente für das Kochgeschirr zu verwenden, die wegen ihrer Geometrie eine diskontinuierliche Bewegung durchführen. Um den thermischen Aktuator vor Korrosion zu schützen, ist es auch möglich, den thermischen Aktuator galvanisch oder chemisch zu beschichten.

Die Anzahl der Bauteile des Kochgeschirrs kann verringert werden, wenn das Stellglied das Schaltelement und/oder das Sensorelement mitumfasst. Durch diese Maßnahme gelingt es, den Montageaufwand des Kochgeschirrs während des Herstellungsprozesses zu verringern und somit auch die Herstellungskosten für das Kochgeschirr zu senken.

Die Relativbewegung zwischen dem Behälter und dem Lagerelement kann sehr zuverlässig und kostengünstig umgesetzt werden, wenn das Schaltelement, insbesondere das thermische Stellglied mit einem Riegelelement verbunden ist, wobei im verriegelten Zustand, insbesondere in der Betriebsposition das Riegelelement kraftschlüssig und/oder formschlüssig mit dem Behälter verbunden ist, insbesondere in einer am Behälter angeordneten Behälterausnehmung oder Behälteröffnung angeordnet ist und das Riegelelement kraftschlüssig und/oder formschlüssig mit dem Lagerelement verbunden ist, insbesondere in einer am Lagerelement angeordneten Lagerausnehmung oder Lageröffnung angeordnet ist. Durch diese Maßnahme kann sichergestellt werden, dass in der Betriebsposition der Behälter, insbesondere der Kontaktabschnitt des Behälters die Kochstelle des Induktionskochfelds zuverlässig und sicher kontaktiert, und zwar bis eine vorbestimmte Grenzwerttemperatur erreicht ist.

Ferner kann eine zuverlässige Relativbewegung zwischen dem Behälter und dem Lagerelement sichergestellt werden, wenn das Schaltelement und/oder das Stellglied mit einem Riegelelement verbunden ist, wobei im verriegelten Zustand, insbesondere in der Betriebsposition das Riegelelement kraftschlüssig und/oder formschlüssig mit dem Behälter verbunden ist, insbesondere in einer am Behälter angeordneten Behälterausnehmung oder Behälteröffnung angeordnet ist und/oder das Riegelelement kraftschlüssig und/oder formschlüssig mit dem Lagerelement verbunden ist, insbesondere in einer am Lagerelement angeordneten Lagerausnehmung oder Lageröffnung angeordnet ist. Des Weiteren kann bevorzugt vorgesehen sein, dass das Riegelelement im entriegelten Zustand, insbesondere in der Ruheposition entweder mit dem Behälter oder mit dem Lagerelement verbunden ist und außerhalb der Behälterausnehmung und/oder Behälteröffnung und/oder außerhalb der Lagerausnehmung und/oder Lageröffnung angeordnet ist.

Nach einer weiteren bevorzugten Ausführung des Kochgeschirrs kann weiter vorgesehen werden, dass das Schaltelement und/oder das Stellglied mit einem Riegelelement verbunden ist, wobei im verriegelten Zustand, insbesondere in der Betriebsposition das Riegelelement kraftschlüssig und/oder formschlüssig mit dem Behälter verbunden ist, insbesondere in einer am Behälter angeordneten Behälterausnehmung oder Behälteröffnung angeordnet ist und das Riegelelement kraftschlüssig und/oder formschlüssig mit dem Lagerelement verbunden ist, insbesondere in einer am Lagerelement angeordneten Lagerausnehmung oder Lageröffnung angeordnet ist und das Riegelelement im entriegelten Zustand, insbesondere in der Ruheposition entweder kraftschlüssig und/oder formschlüssig mit dem Behälter verbunden ist, insbesondere in der Behälterausnehmung oder Behälteröffnung des Behälters angeordnet ist oder das Riegelelement kraftschlüssig und/oder formschlüssig mit dem Lagerelement verbunden ist, insbesondere in der Lagerausnehmung oder Lageröffnung des Lagerelements angeordnet ist.

Das Kochgeschirr kann einen sehr kompakten Aufbau aufweisen, wenn das Schaltelement am Behälter und/oder am Lagerelement oder zwischen dem Behälter und dem Lagerelement angeordnet ist. Dabei kann es sich anbieten, wenn das Schaltelement in einem Spalt oder in einer Kammer angeordnet ist. Das Schaltelement kann somit sicher und geschützt in oder an dem Kochgeschirr angeordnet werden.

Nach einer weiteren bevorzugten Ausführung des Kochgeschirrs kann vorgesehen sein, dass der Spalt oder die Kammer eine Eintrittsöffnung für ein Fluid, insbesondere für Wasserdampf aufweist, welches aus dem Behälter austritt. Durch diese Maßnahme kann sichergestellt werden, dass das Schaltelement und/oder Sensorelement beim Erreichen der Grenzwerttemperatur zuverlässig arbeitet. Ferner kann die Eintrittsöffnung als Behälteröffnung und/oder Lageröffnung ausgebildet sein, um den konstruktiven Aufbau des Kochgeschirrs weiter zu vereinfachen.

Nach einer weiteren bevorzugten Ausführung des Kochgeschirrs kann vorgesehen sein, dass das Lagerelement als Hebevorrichtung für den Behälter ausgebildet ist, wobei die Relativbewegung zwischen dem Lagerelement und dem Behälter beim Übergang von der Betriebsposition in die Ruheposition translatorisch und/oder rotatorisch ausgebildet ist. Die Hebevorrichtung kann in vorteilhafterweise dafür sorgen, dass der Behälter beim Erreichen der Grenzwerttemperatur zuverlässig von der Kochstelle entfernt wird.

Nach einer weiteren bevorzugten Ausführung des Kochgeschirrs kann vorgesehen sein, dass das Stellglied in dem Behälter in darin aufnehmbaren Kochgut und/oder Gargut angeordnet ist. Hierdurch hat das Stellelement direkten Kontakt zu dem Kochgut und/oder Gargut, wodurch die Grenztemperatur direkt abgeleitet werden kann. Bei Erreichen der Grenztemperatur im Kochgut und/oder Gargut kann so zuverlässig eine Unterbrechung der Erhitzung des Koch und / oder Gargutes erfolgen.

Das Kochgeschirr kann sehr vorteilhaft in einem Kochsystem verwendet werden. Das Kochsystem kann dabei ein Induktionskochfeld und das Kochgeschirr aufweisen, wobei das Kochgeschirr vorzugsweise als Wasserkocher ausgebildet ist. Das Induktionskochfeld kann beispielsweise vier Kochstellen und ein Bedienfeld zum Anschalten und/oder Ausschalten dieser aufweisen.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es ist darauf hinzuweisen, dass die Figuren besonders bevorzugte Ausführungsbeispiele der Erfindung zeigen, die Erfindung jedoch nicht darauf beschränkt ist. Es zeigen:
- Figur 1: ein nicht erfindungsgemäßes Kochgeschirr in einer Betriebsposition gemäß einer ersten Ausführungsform,
- Figur 2: das nicht erfindungsgemäßes Kochgeschirr in einer Ruheposition gemäß der ersten Ausführungsform,
- Figur 3: ein nicht erfindungsgemäßes Kochgeschirr in einer Betriebsposition gemäß einer zweiten Ausführungsform,
- Figur 4: das nicht erfindungsgemäßes Kochgeschirr in einer Ruheposition gemäß der zweiten Ausführungsform.
- Figur 5: ein Kochgeschirr in einer Betriebsposition gemäß einer dritten Ausführungsform,
- Figur 6: das Kochgeschirr in einer Ruheposition gemäß der dritten Ausführungsform,
- Figur 7: ein Kochgeschirr in einer Betriebsposition gemäß einer vierten Ausführungsform,
- Figur 8: das Kochgeschirr in einer Ruheposition gemäß der vierten Ausführungsform,
- Figur 9: ein Kochgeschirr in einer Betriebsposition gemäß einer fünften Ausführungsform,
- Figur 10: das Kochgeschirr in einer Ruheposition gemäß der fünften Ausführungsform,
- Figur 11: ein Kochgeschirr in einer Betriebsposition gemäß einer sechsten Ausführungsform, und
- Figur 12: das Kochgeschirr in einer Ruheposition gemäß der sechsten Ausführungsform.

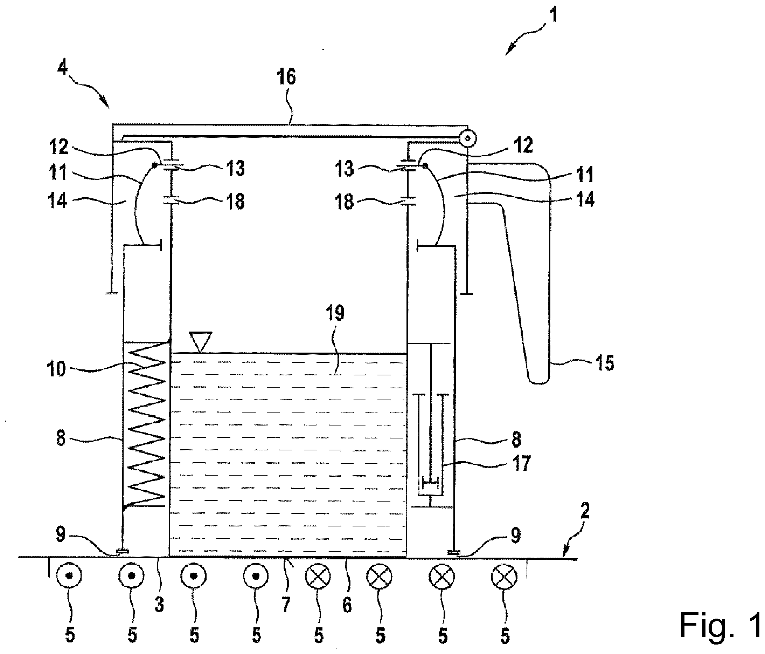

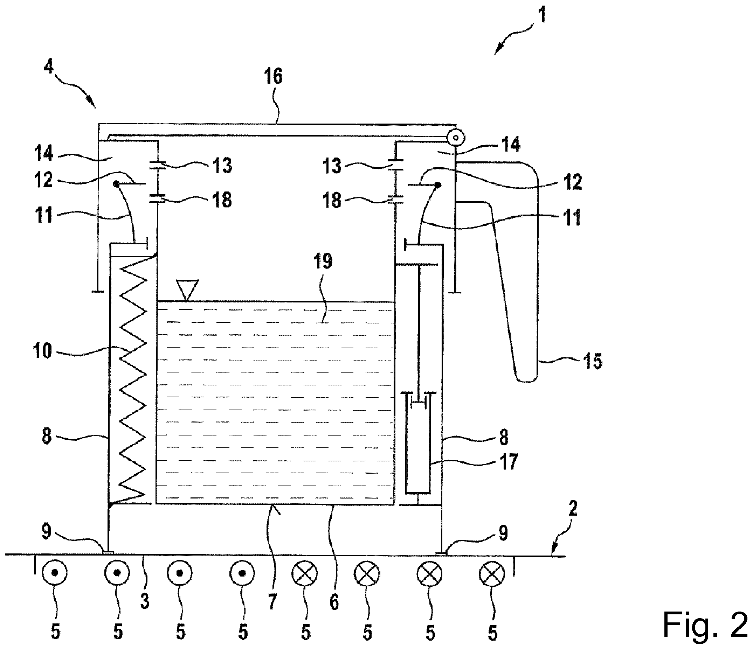

In den Figuren 1 und 2 ist ein nicht erfindungsgemäßes Kochsystem 1 aufweisend ein Induktionskochfeld 2 mit einer Kochstelle 3 und ein vorzugsweise als Wasserkocher ausgebildetes Kochgeschirr 4 mit einer Handhabe 15 visualisiert. Das Induktionskochfeld 2, insbesondere die Kochstelle 3 umfasst Induktionsspulen 5, welche zur Erhitzung und/oder Erwärmung des Kochgeschirrs 4 ausgebildet sind. Das Kochgeschirr 4 weist einen zur Anordnung von Kochgut 19 und/oder Gargut ausgebildeten Behälter 6 mit mindestens einem Kontaktabschnitt 7 zur Kontaktierung mit dem Induktionskochfeld 2 auf. Der Kontaktabschnitt 7, insbesondere eine Bodenwandung des Behälters, welche in Kontakt mit dem Induktionskochfeld 2, insbesondere mit der Kochstelle 3 ist, kann dabei einen sandwichförmigen Aufbau aufweisen. So kann beispielsweise der Kontaktabschnitt 7 eine erste Schicht aufweisen, welche in der Betriebsposition im direkten Kontakt mit dem Induktionskochfeld, insbesondere mit der Kochstelle ist. Weiter kann der Kontaktabschnitt 7 eine zweite Schicht aufweisen, welche über der ersten Schicht angeordnet ist und eine dritte Schicht aufweisen, welche über der zweiten Schicht angeordnet ist. Je nach Ausführung des Kochgeschirrs 4 kann die zweite Schicht ein nichtferromagnetisches Material umfassen und die erste Schicht und vorzugsweise die dritte Schicht ein ferromagnetisches Material umfassen, so dass die zweite Schicht zwischen der ersten Schicht und der dritten Schicht eingebettet ist. Dabei kann die zweite Schicht vollständig und von außen unsichtbar eingebettet sein. Alternativ ist es möglich, dass die zweite Schicht vorzugsweise als, insbesondere umlaufender Streifen außen am Behälter 6 sichtbar ist.

Ebenfalls ist es möglich, dass die Bodenwandung des Behälters 6 eine sandwichförmige Anordnung mit zwei Schichten aufweist, wobei die erste Schicht, welche in der Betriebsposition im direkten Kontakt mit dem Induktionskochfeld 2, insbesondere mit der Kochstelle 3 ist, ein nichtferromagnetisches Material umfasst und die zweite Schicht ein ferromagnetisches Material umfasst. In der einfachsten Form kann der Kontaktabschnitt 7 eine einzige Schicht aufweisen, welche ein ferromagnetisches Material umfasst. Es sollte jedoch immer sichergestellt werden, dass die ferromagnetische Schicht des Kontaktabschnitts 7 derart angeordnet ist, dass in der Betriebsposition der Behälter 6 durch das Induktionskochfeld 2 zuverlässig auf die gewünschte Temperatur erhitzt bzw. erwärmt werden kann.

Das Kochgeschirr 4 weist mindestens ein beispielsweise ringförmiges und/oder zylinderförmiges ausgestaltetes Lagerelement 8 mit mindestens einem Auflageabschnitt 9 zur Kontaktierung mit dem Induktionskochfeld 2 auf, welches bewegbar an dem Behälter 6 angeordnet ist.

Das Kochgeschirr 4 weist mindestens ein Stellglied 10 zur Erzeugung einer Relativbewegung zwischen dem Lagerelement 8 und dem Behälter 6 auf, wobei das Stellglied 10 mit dem Lagerelement 8 und mit dem Behälter 6 kraftschlüssig und/oder formschlüssig verbunden ist. Das Stellglied 10 ist vorzugsweise als Federelement, insbesondere als Blattfeder oder Spiralfeder oder Tellerfeder ausgebildet und/oder als Formgedächtniselement ausgebildet. Des Weiteren ist ein Dämpfungselement 17 vorgesehen, welches das Lagerelement 8 mit dem Behälter 6 kraftschlüssig und/oder formschlüssig verbindet. Das Kochgeschirr 4 kann somit ein "Feder-Dämpfer-Masse-System" aufweisen, welches mindestens das Stellglied 10 und das Dämpfungselement 17 umfasst.

Der Auflageabschnitt 9 des Lagerelements 8, vorzugsweise das Lagerelement 8 ist vollständig aus einem nichtferromagnetischen Material ausgebildet. Ferner ist zumindest der Kontaktabschnitt 7 des Behälters 6, vorzugsweise der Behälter 6 vollständig aus einem ferromagnetischen Material ausgebildet.

An dem Kochgeschirr 4 ist mindestens ein Schaltelement 11 und/oder ein Sensorelement zum Aktivieren des Stellglieds 10 angeordnet, wobei das Schaltelement 11 beispielsweise als thermischer Aktuator ausgestaltet ist, der hier vorzugsweise aus einem Bimetall oder alternativ aus einem Formgedächtniselement ausgebildet ist. Das Schaltelement 11 ist hier am Lagerelement 8 angeordnet, und zwar in einer Kammer 14, welche durch den Behälter 6 und das Lagerelement 8, insbesondere durch Wandungen des Behälters 6 und/oder des Lagerelements 8 gebildet wird. Ferner weist der Behälter 6 eine Deckelelement 16 auf, welches schwenkbeweglich am Behälter 6 angeordnet ist.

In einer Betriebsposition gemäß der Figur 1 ist zumindest der Kontaktabschnitt 7 des Behälters 6 kontaktierend auf der Kochstelle 3. Wie man weiter gut in der Figur 1 erkennen kann, ist in der Betriebsposition der Auflageabschnitt 9 des Lagerelements 8 beabstandet zu dem Induktionskochfeld 2 angeordnet. Alternativ ist es denkbar, dass in der Betriebsposition der Auflageabschnitt 9 des Lagerelements 8 kontaktierend auf dem Induktionskochfeld 2 angeordnet ist. In einer Ruheposition gemäß der Figur 2 ist der Kontaktabschnitt 7 des Behälters 6 beabstandet zu der Kochstelle 3 und der Auflageabschnitt 9 des Lagerelements 8 kontaktierend auf dem Induktionskochfeld 2 angeordnet.

Das Lagerelement 8 kann somit als Hebevorrichtung für den Behälter 6 vorgesehen werden, wobei die Relativbewegung zwischen dem Lagerelement 8 und dem Behälter 6 beim Übergang von der Betriebsposition in die Ruheposition im vorliegenden Fall translatorisch ausgebildet ist. Das Stellglied 10 und/oder das Dämpfungselement 17 können auch derart am Behälter 6 und/oder Lagerelement 8 angeordnet sein, dass die Relativbewegung zwischen dem Lagerelement 8 und dem Behälter 6 beim Übergang von der Betriebsposition in die Ruheposition rotatorisch erfolgt.

Das Schaltelement 11 ist mit einem Riegelelement 12 verbunden, wobei im verriegelten Zustand, insbesondere in der Betriebsposition das Riegelelement 12 kraftschlüssig und/oder formschlüssig mit dem Behälter 6 verbunden ist. Hierbei ist im vorliegenden Fall das Riegelelement in einer am Behälter 6 angeordneten Behälteröffnung 13 oder alternativ Behälterausnehmung angeordnet. Das Riegelelement 12 ist im entriegelten Zustand, insbesondere in der Ruheposition des Kochgeschirrs 4 außerhalb der Behälteröffnung 13 oder alternativ außerhalb der Behälterausnehmung des Behälters 6 angeordnet. Dabei ist das Riegelelement 12 mit dem Lagerelement 8 verbunden. So kann weiter das Riegelelement 12 und/oder die Behälteröffnung 13 eine nicht näher dargestellte Führungsschräge aufweisen, um den Entriegelungsvorgang und/oder den Verriegelungsvorgang zu vereinfachen.

Die Kammer 14 weist eine Eintrittsöffnung 18 für ein Fluid, insbesondere für Wasserdampf auf, welches aus dem Behälter 6 in die Kammer 14 austritt. In einer sehr vorteilhaften Weiterbildung des Kochgeschirrs 4 kann auch vorgesehen sein, dass die Eintrittsöffnung 18 als Behälteröffnung 13 und/oder alternativ als Lageröffnung ausgebildet ist.

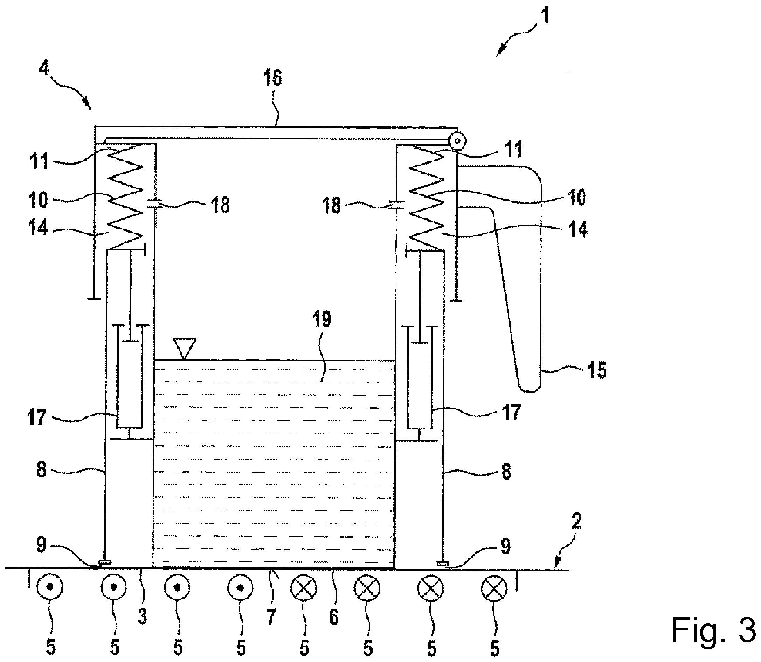

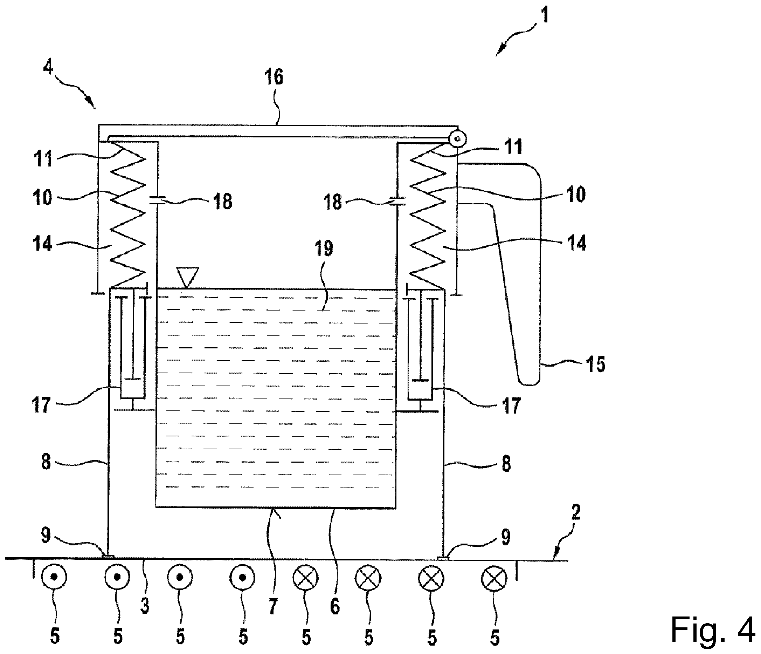

In den Figuren 3 und 4 ist ein nicht erfindungsgemäßes Kochgeschirr 4 gemäß einer zweiten Ausführungsform dargestellt. Im Folgenden werden für gleiche und gleich wirkende Teile gleiche Bezugsziffern verwendet. Es wird nur auf die wesentlichen Unterschiede zwischen dem ersten und dem zweiten Ausführungsbeispiel eingegangen.

Das Ausführungsbeispiel der Figuren 3 und 4 weist im Wesentlichen denselben konstruktiven Aufbau auf, wie das Ausführungsbeispiel der Figuren 1 und 2. Der wesentliche Unterschied liegt darin, dass die Stellglieder 10 jeweils als Schaltelement 11 ausgebildet sind. Die Stellglieder 10 und somit auch das Schaltelement 11 sind hierbei als thermischer Aktuator ausgestaltet, der vorzugsweise aus einem Bimetall oder Formgedächtniselement ausgebildet ist, so dass vorzugsweise auf ein Riegelelement verzichtet werden kann. Daraus folgt auch, dass der Behälter nur eine Eintrittsöffnung 18 für das Fluid, insbesondere für Wasserdampf aufweisen kann. Des Weiteren ist jedem Stellglied 10 jeweils ein Dämpfungselement 17 zugeordnet.

Nachfolgend wird die Funktionsweise des nicht erfindungsgemäßen Kochgeschirrs 4 gemäß der ersten Ausführungsform und den Figuren 1 und 2 beschrieben.

Zunächst befüllt ein Benutzer den Behälter 6 mit Kochgut 19, insbesondere mit Tee oder mit Wasser und stellt den Behälter 6 auf die Kochstelle 3 des Induktionskochfelds 2. Dabei kontaktiert der Kontaktabschnitt 7 des Behälters 6 die Kochstelle 3 und der Auflageabschnitt 9 des Lagerelements 8 ist vorzugsweise beabstandet zu dem Induktionskochfeld 2 angeordnet. Das Riegelelement 13 ist in der Behälteröffnung 13 angeordnet, so dass der Kontaktabschnitt 7 stets das Kochfeld 3 kontaktiert. Das Stellglied 10 ist in der Betriebsposition in einem vorgespannten Zustand.

Anschließend oder bereits zuvor wird die Kochstelle 3 durch beispielsweise am Induktionskochfeld 2 angeordnete Bedienelemente angeschaltet.

Das Kochgut 19 beginnt an zu kochen. Wenn das Kochgut 19 beispielsweise als Wasser ausgebildet ist, fängt dieses bei einer Grenzwerttemperatur von 100 Grad Celsius an zu kochen und Wasserdampf tritt aus dem Behälter 6 durch die Eintrittsöffnung 18 in die Kammer 14. Das beispielsweise aus einem Bimetall ausgebildete Schaltelement 11 verformt sich derart, dass das Riegelelement 12 sich aus der Behälteröffnung 13 heraus bewegt. Das hier als Federelement ausgestaltete Stellglied 10 entspannt sich zumindest teilweise, so dass das Federelement eine Restspannung beibehalten kann, und es findet eine Relativbewegung zwischen dem Behälter 6 und dem Lagerelement 8 statt. Dabei befördert das Stellglied 10 das Lagerelement 8 nach unten bis der Auflageabschnitt 9 das Induktionskochfeld 2, vorzugsweise neben der Kochstelle 3 kontaktiert, wobei das Lagerelement 8 beabstandet zu dem Behälter 6 angeordnet ist. Danach entspannt sich das Stellglied 10 weiter und der Behälter 6 wird nach oben bewegt, so dass der Kontaktabschnitt 7 des Behälters 6 beabstandet zu der Kochstelle 2 angeordnet ist. Somit ist das Kochgeschirr 4 in der Ruheposition angeordnet und das Kochgut 19 kann durch die Kochstelle 3 nicht weiter erwärmt werden, weil bei einem Induktionskochfeld 2 das Kochgeschirr 4, insbesondere der Kontaktabschnitt 7 die Kochstelle 3, insbesondere eine Oberfläche der Kochstelle 3 kontaktieren muss. Um das Kochgeschirr 4 wieder zurück in die Betriebsposition zu bringen, muss der Benutzer das Lagerelement 8 entgegen der Kraft des Stellglieds 10 in Richtung des Deckelelements 16 bewegen, und zwar solange bis das Riegelelement 12 in die Behälteröffnung 13 einschnappt und dort angeordnet ist.

Nachfolgend wird die Funktionsweise des nicht erfindungsgemäßen Kochgeschirrs 4 gemäß der zweiten Ausführungsform und den Figuren 3 und 4 beschrieben.

Zunächst befüllt ein Benutzer den Behälter mit Kochgut 19, insbesondere mit Tee oder mit Wasser und stellt den Behälter 6 auf die Kochstelle 3 des Induktionskochfelds 2. Dabei kontaktiert der Kontaktabschnitt 7 des Behälters 6 die Kochstelle 3 und der Auflageabschnitt 9 des Lagerelements 8 ist vorzugsweise beabstandet zu dem Induktionskochfeld 2 angeordnet. Das als Stellglied 10 ausgebildete Schaltelement 11 ist in der Betriebsposition in einem vorgespannten Zustand.

Anschließend oder bereits zuvor wird die Kochstelle 3 durch beispielsweise am Induktionskochfeld 2 angeordnete Bedienelemente angeschaltet.

Das Kochgut 19 beginnt an zu kochen. Wenn das Kochgut 19 beispielsweise als Wasser ausgebildet ist, fängt dieses bei einer Grenzwerttemperatur von 100 Grad Celsius an zu kochen und Wasserdampf tritt aus dem Behälter 6 durch die Eintrittsöffnung 18 in die Kammer 14. Das beispielsweise aus einem Bimetall oder Formgedächtnismaterial ausgebildete Stellglied 10 verformt sich derart, dass sich dieses zumindest teilweise entspannt, so dass das Stellglied eine Restspannung beibehalten kann, und es findet eine Relativbewegung zwischen dem Behälter 6 und dem Lagerelement 8 statt. Dabei befördert das Stellglied 10 das Lagerelement 8 nach unten bis der Auflageabschnitt 9 das Induktionskochfeld 2, vorzugsweise neben der Kochstelle 3 kontaktiert, wobei das Lagerelement 8 beabstandet zu dem Behälter 6 angeordnet ist. Danach entspannt sich das Stellglied 10 weiter und der Behälter 6 wird nach oben bewegt, so dass der Kontaktabschnitt 7 des Behälters 6 beabstandet zu der Kochstelle 3 angeordnet ist. Somit ist das Kochgeschirr 4 in der Ruheposition und das Kochgut 19 kann durch die Kochstelle 3 nicht weiter erwärmt werden, weil bei einem Induktionskochfeld 2 das Kochgeschirr 4, insbesondere der Kontaktabschnitt 7 die Kochstelle 3, insbesondere eine Oberfläche der Kochstelle 3 kontaktieren muss. Um das Kochgeschirr 4 wieder zurück in die Betriebsposition zu bringen, muss sich das Stellglied 10 wieder abkühlen. Dabei bewegt sich das Lagerelement 8 und der Behälter 6 wieder selbstständig in die Betriebsposition zurück.

Der Behälter 6 gemäß den Figuren 1 bis 4 kann beispielsweise Stahl und/oder Edelstahl und/oder Gusseisen und/oder Aluminiumguss und/oder Stahlemail und/oder Glas und/oder Keramik umfassen. Des Weiteren sollte der Behälter 6 mindestens einen ferromagnetischen Werkstoff umfassen, wie beispielsweise Kupfer und/oder Aluminium und/oder Stahl.

Das Lagerelement 8 gemäß den Figuren 1 bis 4 kann beispielsweise zumindest teilweise aus Kunststoff ausgebildet sein, vorzugsweise aus Polyamid, Polyester, Polyacetol und kann daher die Werkstoffe PA6, PA66, PA612, TPC-ET, POM, PPA, insbesondere Zytel HTN umfassen. Der Behälter 6 und/oder das Lagerelement 8 sollte für das Garen, Kochen und Erhitzen temperaturgeeignete und für Lebensmittel zugelassene Werkstoffe umfassen.

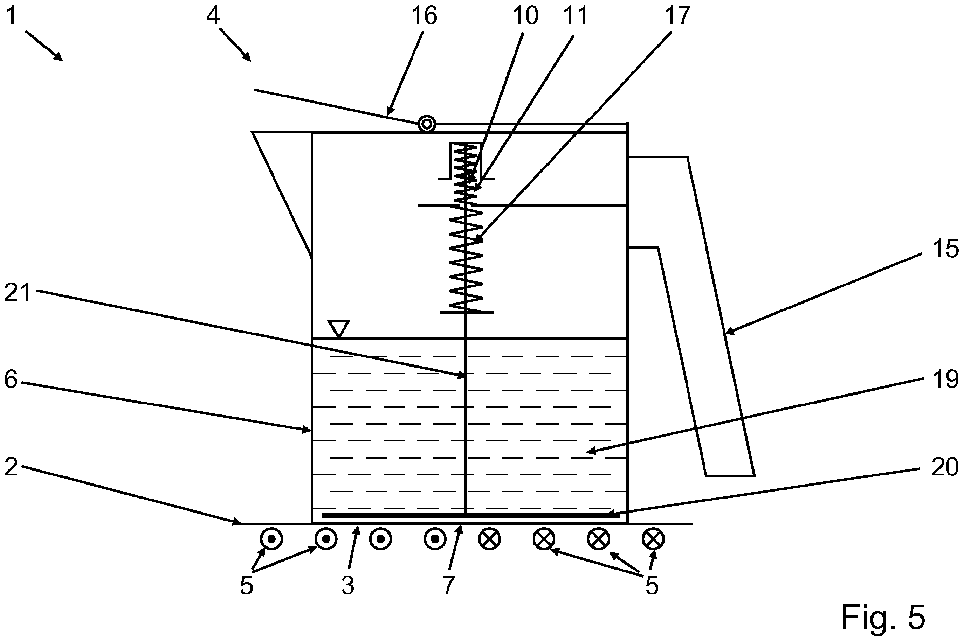

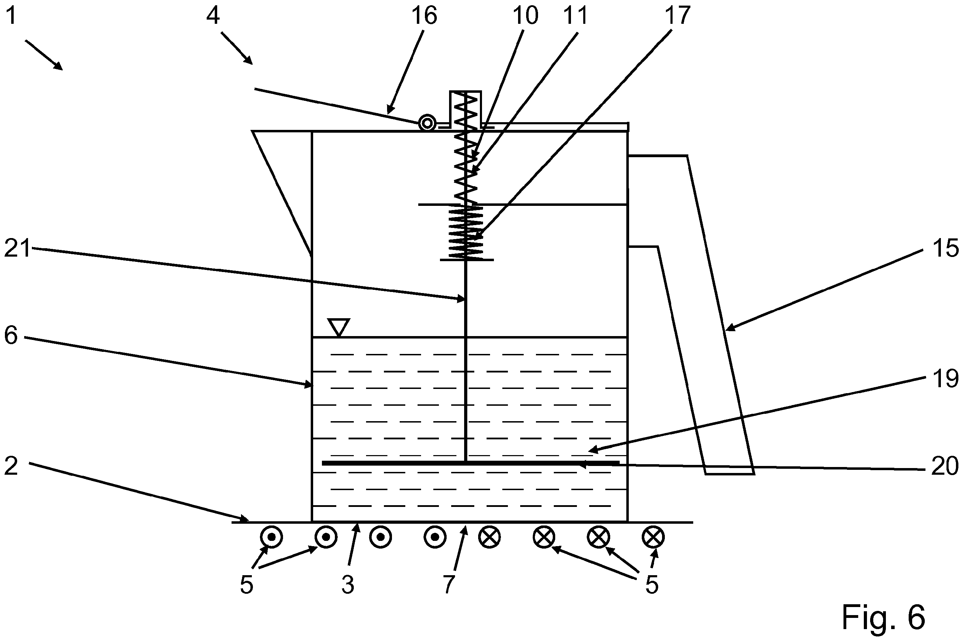

Die Figuren 5 und 6 zeigen ein Kochsystem 1 aufweisend ein Induktionskochfeld 2 mit einer Kochstelle 3 und ein vorzugsweise als Wasserkocher ausgebildetes Kochgeschirr 4 mit einer Handhabe 15. Das Induktionskochfeld 2 bzw. die Kochstelle 3 umfasst angedeutete Induktionsspulen 5, welche zur Erhitzung und/oder Erwärmung des Kochgeschirrs 4 mittels Induktion ausgebildet sind. Das Kochgeschirr 4 weist einen zur Anordnung von Kochgut 19 und/oder Gargut ausgebildeten Behälter 6 mit mindestens einem Kontaktabschnitt 7 zur Kontaktierung mit dem Induktionskochfeld 2 auf. Außerdem verfügt das Kochgeschirr 4 über eine Kochplatte 20 die relativ zu dem Kontaktabschnitt 7 in dem Behälter 6 bewegt werden kann. Hierzu ist ein Stellglied 10 vorgesehen, welches die Relativbewegung zwischen der Kochplatte 20 und dem Kontaktabschnitt 7 im Behälter ausübt. Mittels der über das Stellglied 10 erzeugten Relativbewegung kann die Kochplatte 20 in einer Betriebsposition und in einer Ruheposition relativ zu dem Kontaktabschnitt 7 positioniert werden. In der Betriebsposition wird die Kochplatte 20 durch den Kontaktabschnitt 7 hindurch von dem Induktionskochfeld 2, welches den Kontaktabschnitt 7 kontaktiert, induktiv erwärmt. Bei Positionierung der Kochplatte 20 in Ruheposition hingegen ist die Kochplatte 20 so weit von dem Kontaktabschnitt 7 beabstandet, dass keine Induktion durch das den Kontaktabschnitt 7 kontaktierende Induktionskochfeld 2 erfolgen kann. Somit wird das Koch- und / oder Gargut 19 in Ruheposition der Kochplatte 20 nicht weiter durch das Induktionskochfeld 2 erwärmt. Hierdurch kann über die von dem Stellglied 10 ausgeübte Relativbewegung der Kochplatte 20 eine gezielte Erwärmung des Koch- und / oder Gargutes 19 erreicht werden. Das nicht ferromagnetische Material am Kontaktabschnitt 7 des Behälters 6 erhitzt sich hierbei nicht durch die Induktion mittels des Induktionskochfeldes 2, da in dem nicht ferromagnetischen Material keine Wirbelströme entstehen, während die ferromagnetisch ausgestaltete Kochplatte 20 durch die von der Kochstelle 3 erzeugten Wirbelströme in der Betriebsposition erhitzt wird. In Figur 5 gut zu erkennen ist, dass das Stellglied 10 als zentral angeordnete Feder ausgebildet ist, die mittels Federkraft die Kochplatte 20 über ein Hebeelement 21 zwischen der in Figur 5 gezeigten Betriebsposition und der in Figur 6 gezeigten Ruheposition bewegt. Hierzu ist das Stellglied 10 als thermischer Aktuator ausgestaltet, wobei die Feder aus einer Formgedächtnislegierung besteht. Bei einer Temperaturänderung ändert sich die Federkraft des Stellgliedes 10 durch eine Formänderung der Formgedächtnislegierung, sodass die Kochplatte 20 von der Betriebsposition in die Ruheposition bewegt wird. Weiterhin ist zu erkennen, dass ein Dämpfungselement 17 vorgesehen ist, gegen welches die Kochplatte 20 durch die vom Stellglied 10 erzeugte Stellkraft bewegt wird. In einer bevorzugten Ausgestaltung kann das Dämpfungselement 17 als Gegenfeder ausgeführt sein, welche die Stellkraft des Stellglieds 10 abfedert. In dem hier gezeigten Ausführungsbeispiel erfolgt die vom Stellglied 10 ausgeübte Relativbewegung der Kochplatte 20 zu dem Kontaktabschnitt 7 in einer translatorischen Anhebung. In den Figuren 5 bis 10 ist zu erkennen, dass das Stellglied 10 als Feder ausgebildet und innerhalb des als Feder ausgeführten Dämpfungselementes17 geführt ist. Hierdurch ist ein kompakter Aufbau möglich.

Die Figur 6 zeigt das Kochgeschirr 4 gemäß Figur 5, wobei hier die Kochplatte 20 von dem Stellglied 10 in die Ruheposition bewegt ist. So wurde bei Erreichen einer am Stellglied 10 festgelegten Grenzwerttemperatur über die Hebevorrichtung die Kochplatte 20 von dem das Induktionskochfeld 2 kontaktierenden Kontaktabschnitt 7 entfernt, sodass keine weitere Erhitzung der Kochplatte 20 erfolgt. In der gezeigten Ruheposition erzeugt die Kochplatte 20 des Induktionskochfeldes 2 keine Wirbelströme in der Kochplatte 20, sodass über das Stellglied 10 bei Erreichen der Grenztemperatur zuverlässig eine Unterbrechung der Erhitzung des Koch und / oder Gargutes 19 erfolgt.

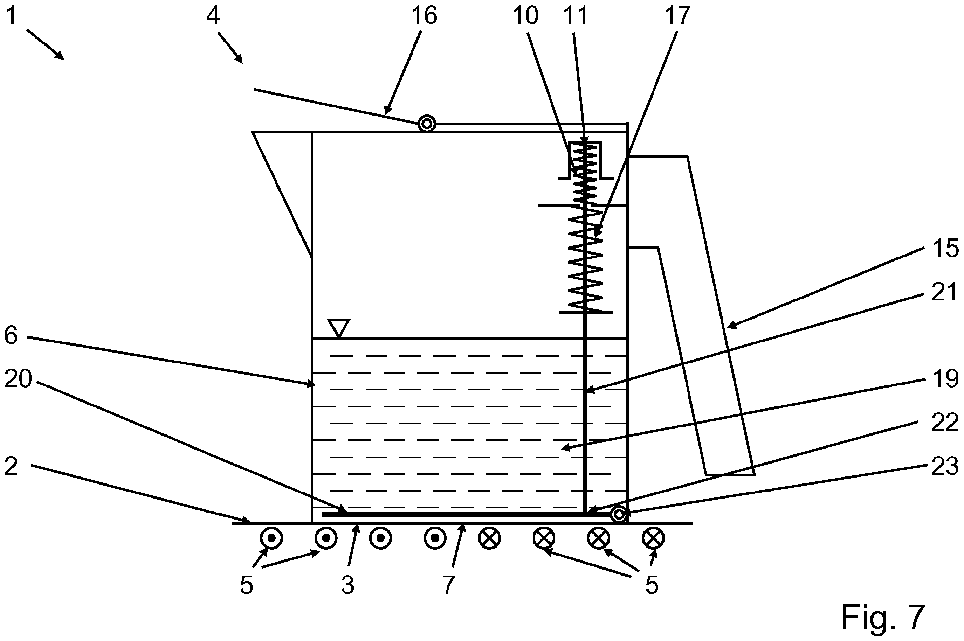

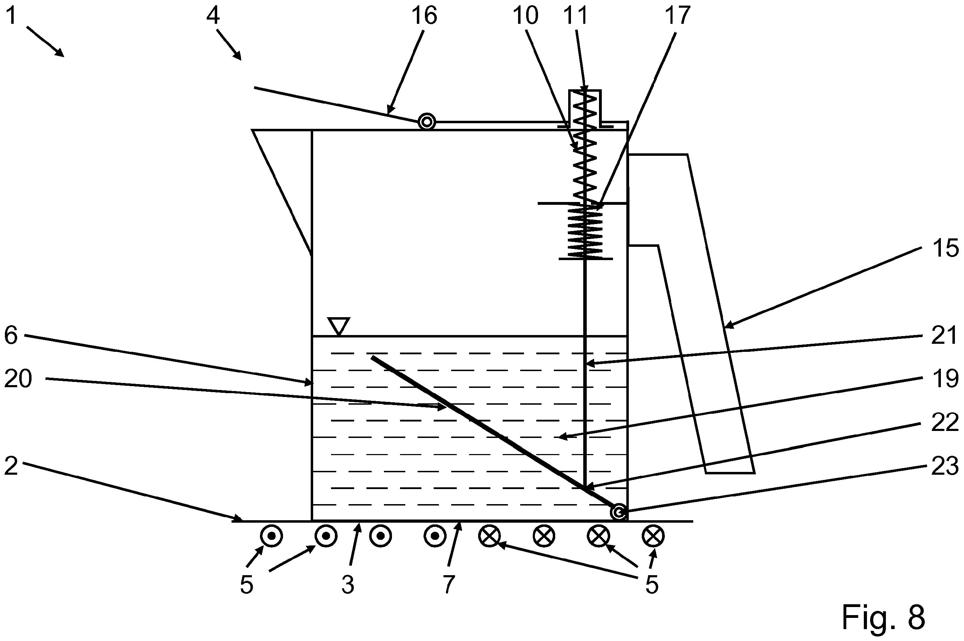

Die Figuren 7 und 8 zeigen ein Kochsystem 1 aufweisend ein Induktionskochfeld 2 mit einer Kochstelle 3 und ein Kochgeschirr4 mit einem ähnlichen konstruktiven Aufbau, wie das Ausführungsbeispiel der Figuren 5 und 6. Der wesentliche Unterschied liegt darin, dass das Stellglied 10 außermittig angeordnet ist. Auf diese Weise ist in dem Behälter 6 mehr Platz für die Aufnahme größerer Gargutteile. Während die Figur 7 das Kochgeschirr 4 mit der Kochplatte 20 in Betriebsposition zeigt, ist die Kochplatte 20 in Figur 8 durch das Stellglied 10 beabstandet zu dem Kontaktabschnitt 7 in der Ruheposition angeordnet. Auch hier wurde die Kochplatte 20 an dem Hebeelement 21 gegen die Federkraft des Dämpfungselementes 17 von dem Stellglied 10 in die Ruheposition bewegt. Bei einer durch das Stellglied 10 festgelegten Grenztemperatur ändert sich die Form, des als Feder aus Formgedächtnislegierung gebildeten Stellgliedes 10, sodass die Federkraft des Stellgliedes 10 über die Federkraft, die von dem Dämpfungselement 17 entgegengesetzt auf das Hebeelement 21 ausgeübt wird, erhöht wird. Hierdurch bewegt sich die Kochplatte 20 bei Erreichen der Grenztemperatur an dem Stellglied 10 automatisch von der Betriebsposition in die Ruheposition, wodurch der Kochvorgang auf dem Induktionskochfeld 2 in dem Kochgeschirr 4 unterbrochen wird. Neben der außermittigen Anordnung des Stellglieds 10 kann vorgesehen sein, dass die Kochplatte 20 schwenkbeweglich an dem Behälter 6 angelenkt ist. Hierdurch wird die Relativbewegung zwischen Kochplatte 20 und Kontaktabschnitt 7 zu einer Schwenkbewegung um die Anlenkung 23. Dies ist in Figur 8 angedeutet, welche die Kochplatte 20 in Ruheposition zeigt. Die Kochplatte 20 ist über ein Gelenk 22 mit dem Hebeelement 21 verbunden, sodass die Schwenkbewegung der Kochplatte 20 eine Gelenkbewegung umfasst.

Aus der Figur 8 wird ersichtlich, dass die Kochplatte 20 zum Kontaktabschnitt 7 in Ruheposition so verschwenkt ist, dass keine Induktion der Kochplatte 20 durch das den Kontaktabschnitt 7 kontaktierende Induktionskochfeld 2 erfolgt. Hierdurch wird mittels der Verschwenkung der Kochplatte um die Anlenkung 23 der Kochvorgang bei Erreichen einer Grenztemperatur, die durch das Stellglied 10 festgelegt ist, unterbrochen. Das Erreichen der Grenztemperatur am Stellglied 10 führt zu einer Formänderung des als Feder ausgebildeten Stellgliedes 10, da dieses aus einer Formgedächtnislegierung besteht. Die Formänderung führt zu einer veränderten Federkraft des Stellgliedes 10, sodass die Kochplatte 20 über das Hebeelement 21 angehoben und um die Anlenkung 23 verschwenkt wird. Diese Bewegung erfolgt gegen die Federkraft des Dämpfungselements 17, welches die Kochplatte 20 in Betriebsposition bewegt, solange die Federkraft des Stellgliedes 10 geringer ist.

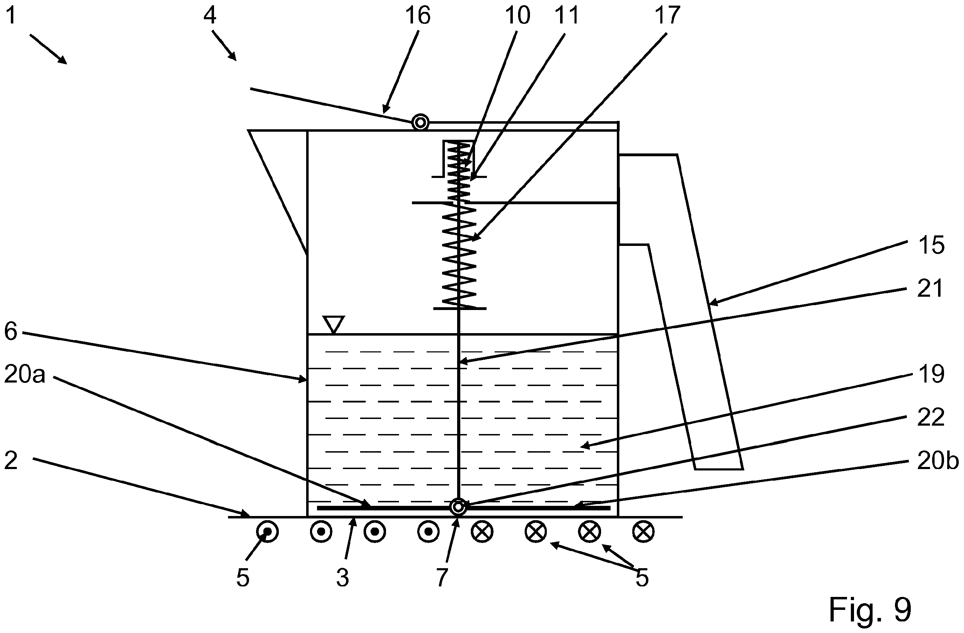

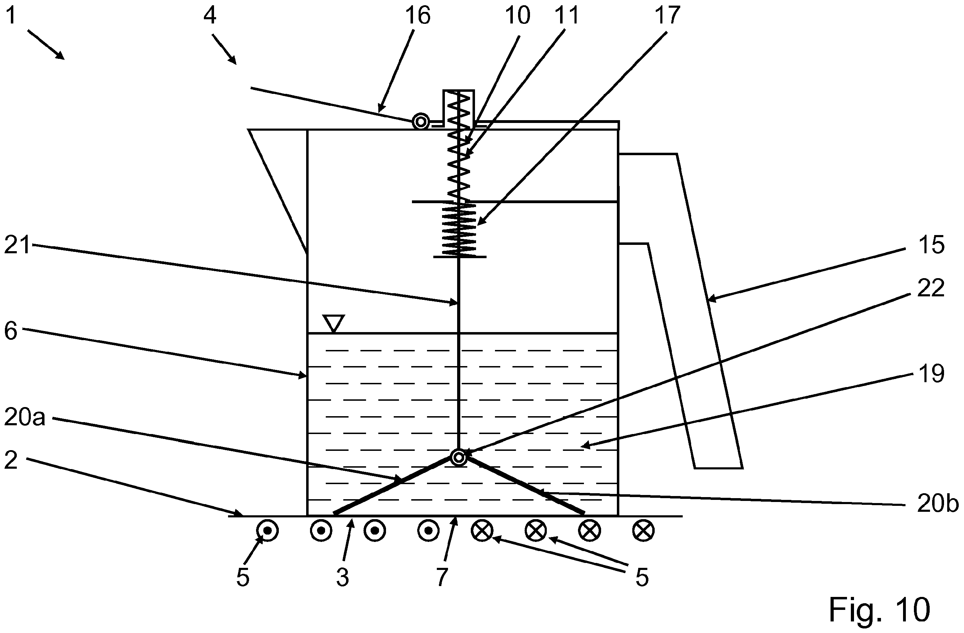

Die Figuren 9 und 10 zeigen ein Kochsystem 1 aufweisend ein Induktionskochfeld 2 mit einer Kochstelle 3 und ein Kochgeschirr 4 mit einem ähnlichen konstruktiven Aufbau, wie das Ausführungsbeispiel der Figuren 5 und 6. Der wesentliche Unterschied liegt darin, dass die Kochplatte 20 mehrteilig aufgebaut ist. Die Teile 20a, 20b der Kochplatte 20 sind schwenkbeweglich zueinander angeordnet, sodass die Relativbewegung zwischen der Kochplatte 20 und dem Kontaktabschnitt 7 eine Schwenkbewegung der Kochplattenteile 20b, 20b darstellt, sodass die Kochplattenteile 20a, 20b in Ruheposition, wie in Figur 10 gezeigt so gegenüber dem Kontaktabschnitt verschwenkt sind, dass eine Induktion der Kochplatte 20 durch das den Kontaktabschnitt 7 kontaktierende Induktionskochfeld 2 unterbleibt. Die Kochplattenteile 20a, 20b sind hier über ein Gelenk 22 mit dem Hebeelement 21 verbunden, über welches die Stellkraft des Stellgliedes 10 auf die Kochplatte 20 übertragen wird.

In einer besonders vorteilhaften Ausgestaltung umfasst das Stellglied 10 ein Element aus einer Formgedächtnislegierung, welche bei Anliegen einer Vorspannung die Umwandlungstemperatur ändert, wobei über ein Einstellelement die Vorspannung eingestellt werden kann. Hierdurch kann die von dem Stellglied 10 festgelegte Grenztemperatur, bei welcher der Koch- bzw. Garvorgang unterbrochen wird eingestellt werden. Bei dem so einstellbaren Element kann es sich um das als Feder ausgebildete Stellglied 10, aber beispielsweise auch das Schaltelement 11 (Fig. 1 bis 4) handeln. Mit der Änderung der Umwandlungstemperatur kann das Koch- und Gargut 19 auf unterschiedliche, über aus Einstellelement auswählbare Temperaturen erhitzt werden. Bei dem Einstellelement kann es sich beispielsweise um ein Rädchen handeln, über dessen Rotation die Vorspannung am Stellglied 10 eingestellt werden kann. Somit kann die Lastabhängigkeit der Umwandlungstemperatur von Formgedächtnislegierungen zur Temperatureinstellung für das Kochgeschirr genutzt werden und die Grenztemperatur zur Einnahme der Ruheposition vom Benutzer über das Einstellelement vorgegeben werden.

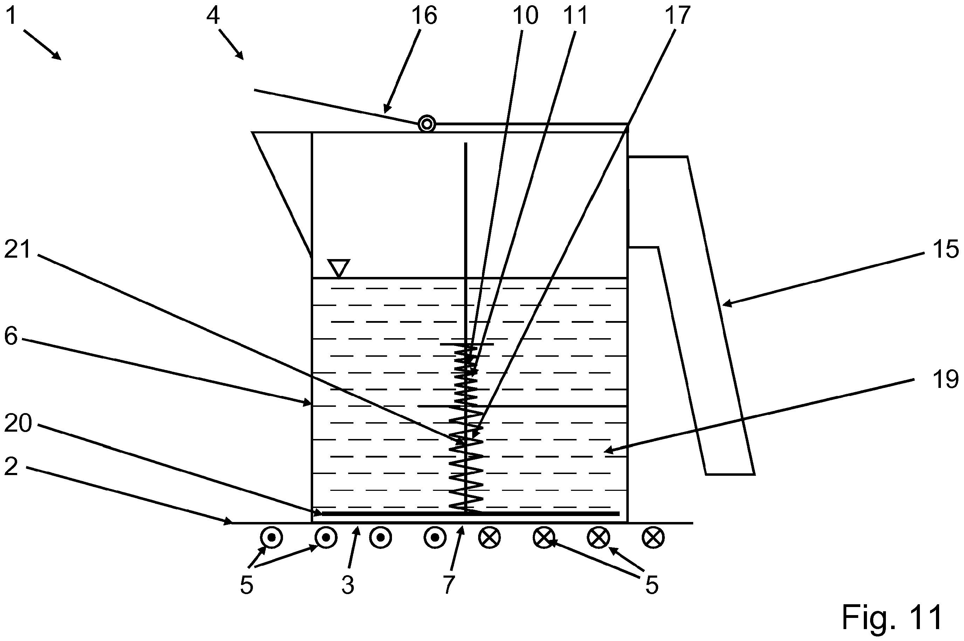

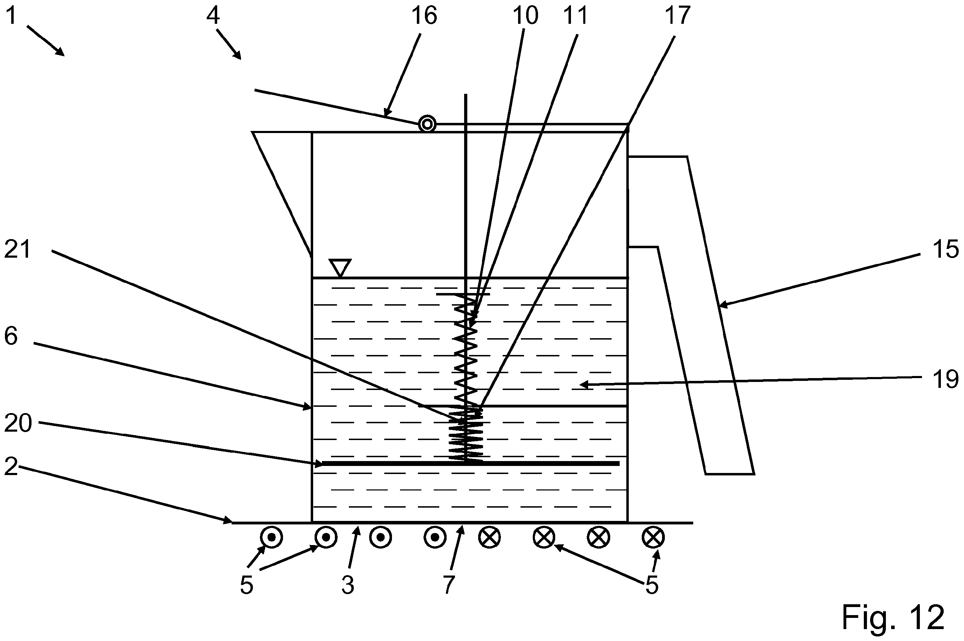

Die Figuren 11 und 12 zeigen ein Kochsystem 1 aufweisend ein Induktionskochfeld 2 mit einer Kochstelle 3 und ein Kochgeschirr 4 mit einem ähnlichen konstruktiven Aufbau, wie das Ausführungsbeispiel der Figuren 5 und 6. Der wesentliche Unterschied liegt darin, dass das Stellglied 10 direkt in dem Kochgut 19 angeordnet ist. Auf diese Weise steht das Stellglied in direktem Kontakt mit dem Kochgut 19. Während die Figur 11 das Kochgeschirr 4 mit der Kochplatte 20 in Betriebsposition zeigt, ist die Kochplatte 20 in Figur 12 durch das Stellglied 10 beabstandet zu dem Kontaktabschnitt 7 in der Ruheposition angeordnet. Auch hier wurde die Kochplatte 20 an dem Hebeelement 21 gegen die Federkraft des Dämpfungselementes 17 von dem Stellglied 10 in die Ruheposition bewegt. Bei einer durch das Stellglied 10 festgelegten Grenztemperatur ändert sich die Form, des als Feder aus Formgedächtnislegierung gebildeten Stellgliedes 10, sodass die Federkraft des Stellgliedes 10 über die Federkraft, die von dem Dämpfungselement 17 entgegengesetzt auf das Hebeelement 21 ausgeübt wird, erhöht wird. Hierdurch bewegt sich die Kochplatte 20 bei Erreichen der Grenztemperatur an dem Stellglied 10 automatisch von der Betriebsposition in die Ruheposition, wodurch der Kochvorgang auf dem Induktionskochfeld 2 in dem Kochgeschirr 4 unterbrochen wird. Über den direkten Kontakt von Kochmedium 19 und Stellglied 10 kann die Grenztemperatur, bei welcher die Kochplatte 20 von der Betriebsposition in die Ruheposition bewegt wird, direkt aus dem Kochgut 19 abgeleitet werden. Hierdurch ist eine noch präzisere Steuerung der Kochplatte 20 über das Stellglied 10 möglich. Besonders vorteilhaft ist auch hier ein Einstellelement über das die Vorspannung des Stellgliedes 10 eingestellt werden kann, wobei das Stellglied 10 aus einer der Formgedächtnislegierung besteht, welche bei Anliegen einer Vorspannung die Umwandlungstemperatur ändert. Hierdurch kann die von dem Stellglied 10 festgelegte Grenztemperatur des Kochgutes 19, bei welcher der Koch- bzw. Garvorgang unterbrochen wird, eingestellt werden. Mit der Änderung der Umwandlungstemperatur kann das Koch- und Gargut 19 auf unterschiedliche, über das Einstellelement auswählbare Temperaturen erhitzt werden. Bei dem Einstellelement kann es sich beispielsweise um ein Rädchen handeln, über dessen Rotation die Vorspannung am Stellglied 10 eingestellt werden kann. Somit kann die Lastabhängigkeit der Umwandlungstemperatur von Formgedächtnislegierungen zur Temperatureinstellung für das Kochgeschirr genutzt werden und die Grenztemperatur zur Einnahme der Ruheposition vom Benutzer über das Einstellelement vorgegeben werden. Dadurch, dass das Stellglied 10 im Gargut oder Kochgut 19 positioniert ist, erfolgt die Temperaturübertragung auf das Stellglied 10 im direkten Kontakt durch das Gargut 19 selbst. Mit der Anordnung des Stellgliedes 10 in dem Kochgut 19 kann die Temperatur so direkt von dem Kochgut 19 an das Stellglied 10 übertragen werden, sodass vorteilhafterweise zur Zubereitung von Milch, Tee oder Kaffee geeignete Temperaturen über das Einstellelement auswählbar sind.

Alternative oder zusätzliche Ausgestaltungen des Kochgeschirrs 4 zu den zuvor beschriebenen Ausführungsbeispielen sind weiter denkbar:
- So ist es möglich, dass das Sensorelement als thermischer Aktuator ausgestaltet ist, der vorzugsweise aus einem Bimetall oder Formgedächtniselement ausgebildet ist.
- Des Weiteren kann beispielsweise das Riegelelement 12 kraftschlüssig und/oder formschlüssig mit dem Lagerelement 8 verbunden sein, insbesondere in einer am Lagerelement 8 angeordneten Lagerausnehmung oder Lageröffnung angeordnet sein. Ferner kann auch das Riegelelement 12 kraftschlüssig und/oder formschlüssig mit dem Lagerelement 8 verbunden sein, insbesondere in der Lagerausnehmung oder Lageröffnung des Lagerelements 8 angeordnet ist. So kann das Riegelelement 12 und/oder die Lagerausnehmung und/oder die Lageröffnung eine nicht näher dargestellte Führungsschräge aufweisen.
- Ebenfalls kann das Schaltelement 11 am Behälter 6 angeordnet sein oder zwischen dem Behälter 6 und dem Lagerelement 8, insbesondere in einem Spalt angeordnet sein, wobei der Spalt beispielsweise durch eine Wandung des Lagerelements 8 und einer Wandung des Behälters 6 gebildet wird.
- Denkbar ist es auch, dass der Spalt die 18 Eintrittsöffnung für ein Fluid, insbesondere für Wasserdampf aufweist, welches aus dem Behälter 6 in den Spalt austritt.
- Alternativ kann auch vorgesehen sein, dass das Stellglied 10 mindestens eine Zahnstange, ein Zahnrad und einen Elektromotor umfasst.
- Die Anzahl der Stellglieder 10 und/oder Dämpfungselemente 17 kann beliebig gewählt werden.
- Die Anzahl der Lagerelemente kann variieren, so dass das Kochgeschirr 4 mehrere Lagerelemente 8, vorzugsweise auch vier Lagerelemente aufweist, die jeweils mit dem Behälter 6 verbunden sind.
- Das Stellglied 10 kann als Lagerelement 8 ausgebildet sein. Mehrere Stellglieder 10 können auch ein oder mehrere Lagerelemente 8 bilden, die mit dem Behälter 6 verbunden sind.

### Bezugszeichenliste

- 1: Kochsystem
- 2: Induktionskochfeld
- 3: Kochstelle
- 4: Kochgeschirr
- 5: Induktionsspulen
- 6: Behälter
- 7: Kontaktabschnitt des Behälters 6
- 8: Lagerelement
- 9: Auflageabschnitt des Lagerelements 8
- 10: Stellglied
- 11: Schaltelement
- 12: Riegelelement
- 13: Behälteröffnung
- 14: Kammer
- 15: Handhabe
- 16: Deckelelement
- 17: Dämpfungselement
- 18: Eintrittsöffnung
- 19: Kochgut
- 20: Kochplatte, 20a, 20b Kochplattenteile
- 21: Hebeelement
- 22: Gelenk
- 23: Anlenkung

## Patentansprüche

1. Kochgeschirr (4) für ein Induktionskochfeld (2), mit mindestens einem zur Aufnahme von Kochgut (19) und/oder Gargut ausgebildeten Behälter (6), mit mindestens einem Kontaktabschnitt (7) zur Kontaktierung des Induktionskochfelds (2), wobei das Kochgeschirr (4) mindestens eine Kochplatte (20) aufweist, welche relativ bewegbar zu dem Kontaktabschnitt (7) in dem Behälter (6) angeordnet ist, und das Kochgeschirr (4) mindestens ein Stellglied (10) zur Erzeugung einer Relativbewegung zwischen der Kochplatte (20) und dem Kontaktabschnitt (7) aufweist,
wobei das Stellglied (10) die Kochplatte (20) und den Kontaktabschnitt (7) in einer Betriebsposition und in einer Ruheposition relativ zueinander positioniert, wobei in der Betriebsposition die Kochplatte (20) durch den Kontaktabschnitt (7) von dem Induktionskochfeld (2) induktiv erwärmt wird, und in der Ruheposition die Kochplatte (20) so weit von dem Kontaktabschnitt (7) beabstandet ist, dass keine Induktion der Kochplatte (20) durch das den Kontaktabschnitt (7) kontaktierende Induktionskochfeld (2) erfolgt,
wobei das Stellglied (10) ein Hebeelement (21) umfasst, welches mit der Kochplatte (20) verbunden ist und eine von dem Stellglied (10) erzeugte Stellkraft zur Erzeugung der Relativbewegung zwischen der Kochplatte (20) und dem Kontaktabschnitt (7) auf die Kochplatte (20) überträgt, wobei das Hebeelement (21) mit der Kochplatte (20) über ein Gelenk (22) verbunden ist, wobei die erzeugte Stellkraft eine Schwenkbewegung der Kochplatte (20) relativ zum Hebeelement (21) in dem Gelenk (22) erzeugt,
**dadurch gekennzeichnet, dass**
ein Dämpfungselement (17) vorgesehen ist, gegen welches die Kochplatte (20) durch die vom Stellglied (10) erzeugte Stellkraft bewegt wird.

2. Kochgeschirr (4) nach Anspruch 1, **dadurch gekennzeichnet, dass** zumindest der Kontaktabschnitt (7) des Behälters (6) ein nichtferromagnetisches Material umfasst, vorzugsweise der Behälter (6) vollständig aus einem nichtferromagnetischen Material ausgebildet ist und zumindest die Kochplatte (20) ein ferromagnetisches Material umfasst, vorzugsweise die Kochplatte (20) vollständig aus einem ferromagnetischen Material ausgebildet ist.

3. Kochgeschirr (4) nach Anspruch 1 oder 2, **dadurch gekennzeichnet, dass** das Stellglied (10) ein Federelement umfasst, insbesondere eine Blattfeder oder Spiralfeder oder Tellerfeder oder Schenkelfeder oder Drehfeder, und/oder als ein Formgedächtniselement ausgebildet ist.

4. Kochgeschirr (4) nach mindestens einem der Ansprüche 1 bis 3, **dadurch gekennzeichnet, dass** das Stellglied (10) als thermischer Aktuator ausgestaltet ist, der vorzugsweise aus einem Bimetall oder Formgedächtniselement gebildet ist.

5. Kochgeschirr (4) nach mindestens einem der Ansprüche 1 bis 4, **dadurch gekennzeichnet, dass** das Stellglied (10) als Hebevorrichtung für die Kochplatte (20) ausgebildet ist, wobei die Relativbewegung zwischen der Kochplatte (20) und dem Kontaktabschnitt (7) beim Übergang von der Betriebsposition in die Ruheposition translatorisch und/oder rotatorisch erfolgt.

6. Kochgeschirr (4) nach mindestens einem der Ansprüche 1 bis 5, **dadurch gekennzeichnet, dass** die Kochplatte (20) schwenkbeweglich an dem Behälter (6) angelenkt ist, wobei die Relativbewegung zwischen der Kochplatte (20) und dem Kontaktabschnitt (7) eine Schwenkbewegung um die Anlenkung (23) ist, wobei die Kochplatte (20) in Ruheposition so gegenüber dem Kontaktabschnitt (7) verschwenkt ist, dass keine Induktion der Kochplatte (20) durch das den Kontaktabschnitt (7) kontaktierende Induktionskochfeld (2) erfolgt.

7. Kochgeschirr (4) nach mindestens einem der Ansprüche 1 bis 6, **dadurch gekennzeichnet, dass** die Kochplatte (20) mehrteilig aufgebaut ist, wobei die Kochplattenteile (20a, 20b) schwenkbeweglich zueinander angeordnet sind, wobei die Relativbewegung zwischen der Kochplatte (20) und dem Kontaktabschnitt (7) eine Schwenkbewegung der Kochplattenteile (20a, 20b) vorzugsweise zueinander und zum Kontaktabschnitt (7) ist, wobei die Kochplattenteile (20a, 20b) in Ruheposition so gegenüber dem Kontaktabschnitt (7) verschwenkt sind, dass keine Induktion der Kochplatte (20) durch das den Kontaktabschnitt (7) kontaktierende Induktionskochfeld (2) erfolgt.

8. Kochgeschirr (4) nach mindestens einem der Ansprüche 1 bis 7, **dadurch gekennzeichnet, dass** die Kochplatte (20) zumindest in der Betriebsposition in dem im Behälter (6) aufgenommenen Kochgut (19) und/oder Gargut kontaktierend angeordnet ist.

9. Kochgeschirr (4) nach mindestens einem der Ansprüche 1 bis 8, **dadurch gekennzeichnet, dass** das Stellglied (10) ein Element aus einer Formgedächtnislegierung umfasst, welche bei Anliegen einer Vorspannung die Umwandlungstemperatur ändert, wobei über ein Einstellelement die Vorspannung eingestellt werden kann.

## Claims

1. Cooking utensil (4) for an induction cooktop (2), with at least one container (6) formed to receive food (19) to be cooked and/or food to be simmered, with at least one contact portion (7) for contacting the induction cooktop (2), wherein the cooking utensil (4) has at least one cooking plate (20), which is arranged in the container (6) such that it can be moved relative to the contact portion (7), and the cooking utensil (4) having at least one actuator (10) for producing a relative movement between the cooking plate (20) and the contact portion (7), wherein the actuator (10) positions the cooking plate (20) and the contact portion (7) relative to each other in an operating position and in a rest position, wherein in the operating position the cooking plate (20) is inductively heated by the induction cooktop (2) through the contact portion (7), and in the rest position the cooking plate (20) is spaced apart from the contact portion (7) to such an extent that no induction of the cooking plate (20) by the induction cooktop (2) contacting the contact portion (7) occurs, wherein the actuator (10) comprises a lifting element (21) which is connected to the cooking plate (20) and transmits an actuating force generated by the actuator (10) to the cooking plate (20) for generating the relative movement between the cooking plate (20) and the contact portion (7), wherein the lifting element (21) is connected to the cooking plate (20) via a joint (22), wherein the generated actuating force generates a pivoting movement of the cooking plate (20) relative to the lifting element (21) in the joint (22), **characterised in that** a damping element (17) is provided, against which the cooking plate (20) is moved by the actuating force generated by the actuator (10).

2. Cooking utensil (4) according to claim 1, **characterised in that** at least the contact portion (7) of the container (6) comprises a non-ferromagnetic material, preferably the container (6) is formed entirely of a non-ferromagnetic material, and at least the cooking plate (20) comprises a ferromagnetic material, preferably the cooking plate (20) is formed entirely of a ferromagnetic material.

3. Cooking utensil (4) according to claim 1 or 2, **characterised in that** the actuator (10) comprises a spring element, in particular a leaf spring or spiral spring or disc spring or torsion spring or torsion spring, and/or is formed as a shape memory element.

4. Cooking utensil (4) according to at least one of claims 1 to 3, **characterised in that** the actuator (10) is formed as a thermal actuator, which is preferably formed from a bimetal or shape memory element.

5. Cooking utensil (4) according to at least one of claims 1 to 4, **characterised in that** the actuator (10) is formed as a lifting device for the cooking plate (20), wherein the relative movement between the cooking plate (20) and the contact portion (7) being translatory and/or rotatory during the transition from the operating position to the rest position.

6. Cooking utensil (4) according to at least one of claims 1 to 5, **characterized in that** the cooking plate (20) is pivotably articulated on the container (6), wherein the relative movement between the cooking plate (20) and the contact portion (7) being a pivoting movement about the articulation (23), wherein the cooking plate (20) being pivoted in the rest position with respect to the contact portion (7) in such a way that no induction of the cooking plate (20) by the induction cooktop (2) contacting the contact portion (7) takes place.

7. Cooking utensil (4) according to at least one of claims 1 to 6, **characterized in that** the cooking plate (20) is of multi-part construction, wherein the cooking plate parts (20a, 20b) being arranged so as to be pivotable relative to one another, wherein the relative movement between the cooking plate (20) and the contact portion (7) causing a pivoting movement of the cooking plate parts (20a, 20b) preferably to one another and to the contact portion (7), wherein the cooking plate parts (20a, 20b) being pivoted in the rest position with respect to the contact portion (7) in such a way that no induction of the cooking plate (20) takes place by the induction cooktop (2) contacting the contact portion (7).

8. Cooking utensil (4) according to at least one of claims 1 to 7, **characterised in that** the cooking plate (20), at least in the operating position, is arranged in contacting manner in the food to be cooked (19) and/or food to be simmered accommodated in the container (6).

9. Cooking utensil (4) according to at least one of claims 1 to 8, **characterised in that** the actuator (10) comprises an element made of a shape memory alloy which changes the transformation temperature when an initial tension is applied, wherein the initial tension can be set via an adjusting element.

## Revendications

1. Ustensile de cuisson (4) pour une plaque de cuisson à induction (2), avec au moins un récipient (6) conçu pour recevoir des aliments à cuire (19) et/ou des aliments à mijoter, avec au moins une section de contact (7) pour établir le contact avec la plaque de cuisson à induction (2), par lequel l'ustensile de cuisson (4) présentant au moins une plaque de cuisson (20), qui est disposée dans le récipient (6) de manière à pouvoir se déplacer par rapport à la section de contact (7), et l'ustensile de cuisson (4) présente au moins un organe de réglage (10) pour générer un mouvement relatif entre la plaque de cuisson (20) et la section de contact (7), l'organe de réglage (10) positionnant la plaque de cuisson (20) et la section de contact (7) l'une par rapport à l'autre dans une position de fonctionnement et dans une position de repos, par lequel la plaque de cuisson (20) étant chauffée par induction par la section de contact (7) de la plaque de cuisson à induction (2) dans la position de fonctionnement, et la plaque de cuisson (20) étant suffisamment éloignée de la section de contact (7) dans la position de repos pour qu'aucune induction de la plaque de cuisson (20) n'ait lieu par la plaque de cuisson à induction (2) en contact avec la section de contact (7), par lequel l'organe de réglage (10) comprenant un élément de levage (21) qui est relié à la plaque de cuisson (20) et transmet à la plaque de cuisson (20) une force d'actionnement générée par l'organe de réglage (16) pour générer le mouvement relatif entre la plaque de cuisson (20) et la section de contact (7), par lequel l'élément de levage (21) étant relié à la plaque de cuisson (20) par une articulation (22), par lequel de réglage générée générant un mouvement de pivotement de la plaque de cuisson (20) par rapport à l'élément de levage (21) dans l'articulation (22), **caractérisé en ce que** un élément d'amortissement (17) est prévu, contre lequel la plaque de cuisson (20) est déplacée par la force de réglage générée par l'organe de réglage (10).

2. Ustensile de cuisson (4) selon la revendication 1, **caractérisé en ce qu'**au moins la section de contact (7) du récipient (6) comprend un matériau non ferromagnétique, de préférence le récipient (6) est entièrement réalisé dans un matériau non ferromagnétique et au moins la plaque de cuisson (20) comprend un matériau ferromagnétique, de préférence la plaque de cuisson (20) est entièrement réalisée dans un matériau ferromagnétique.

3. Ustensile de cuisson (4) selon la revendication 1 ou 2, **caractérisé en ce que** l'organe de réglage (10) comprend un élément de ressort, en particulier un ressort à lame ou un ressort spiral ou un ressort à disque ou un ressort à branches ou un ressort de torsion, et/ou est conçu comme un élément à mémoire de forme.

4. Ustensile de cuisson (4) selon au moins l'une des revendications 1 à 3, **caractérisé en ce que** l'organe de réglage (10) est conçu comme un actionneur thermique, qui est de préférence formé d'un bilame ou d'un élément à mémoire de forme.

5. Ustensile de cuisson (4) selon au moins l'une des revendications 1 à 4, **caractérisé en ce que** l'organe de réglage (10) est réalisé sous la forme d'un dispositif de levage pour la plaque de cuisson (20), par lequel le mouvement relatif entre la plaque de cuisson (20) et la section de contact (7) s'effectuant en translation et/ou en rotation lors du passage de la position de fonctionnement à la position de repos.

6. Ustensile de cuisson (4) selon au moins l'une des revendications 1 à 5, **caractérisé en ce que** la plaque de cuisson (20) est articulée de manière pivotante sur le récipient (6), par lequel le mouvement relatif entre la plaque de cuisson (20) et la section de contact (7) étant un mouvement de pivotement autour de l'articulation (23), par lequel la plaque de cuisson (20) étant pivotée en position de repos par rapport à la section de contact (7) de telle sorte qu'aucune induction de la plaque de cuisson (20) n'a lieu par la plaque de cuisson à induction (2) en contact avec la section de contact (7).

7. Ustensile de cuisson (4) selon au moins l'une des revendications 1 à 6, **caractérisé en ce que** la plaque de cuisson (20) est constituée de plusieurs parties, les parties de la plaque de cuisson (20a, 20b) étant disposées de manière à pouvoir pivoter l'une par rapport à l'autre, par lequel le mouvement relatif entre la plaque de cuisson (20) et la section de contact (7) entraînant un mouvement de pivotement des parties de la plaque de cuisson (20a, 20b) de préférence l'un par rapport à l'autre et par rapport à la section de contact (7), par lequel les parties de la plaque de cuisson (20a, 20b) étant, en position de repos, pivotées par rapport à la section de contact (7) de telle sorte qu'aucune induction de la plaque de cuisson (20) n'a lieu par la plaque de cuisson à induction (2) en contact avec la section de contact (7).

8. Ustensile de cuisson (4) selon au moins l'une des revendications 1 à 7, **caractérisé en ce que** la plaque de cuisson (20) est disposée, au moins dans la position de fonctionnement, de manière à entrer en contact avec l'aliments à cuire (19) et/ou l'aliments à mijoter logé dans le récipient (6).

9. Ustensile de cuisson (4) selon au moins l'une des revendications 1 à 8, **caractérisé en ce que** l'organe de réglage (10) comprend un élément en alliage à mémoire de forme qui modifie la température de transformation lorsqu'une précontrainte est appliquée, la précontrainte pouvant être réglée par un élément de réglage.
